(19) Europäisches Patentamt
European Patent Office
Office européen des brevets

(11) **EP 2 777 859 B1**

(12) **EUROPEAN PATENT SPECIFICATION**

(45) Date of publication and mention
of the grant of the patent:
**28.09.2016 Bulletin 2016/39**

(51) Int Cl.:
***B23K 13/08*** (2006.01)   ***B21C 37/08*** (2006.01)
***B23K 13/00*** (2006.01)   ***B23K 9/025*** (2006.01)

(21) Application number: **12848382.3**

(86) International application number:
**PCT/JP2012/079036**

(22) Date of filing: **08.11.2012**

(87) International publication number:
**WO 2013/069748 (16.05.2013 Gazette 2013/20)**

(54) **MONITORING DEVICE, METHOD, AND PROGRAM FOR SEAM WELDING, AND STORAGE MEDIUM**

ÜBERWACHUNGSVORRICHTUNG, VERFAHREN UND PROGRAMM ZUM NAHTSCHWEISSEN SOWIE SPEICHERMEDIUM

DISPOSITIF DE SURVEILLANCE, PROCÉDÉ, ET PROGRAMME PERMETTANT UN SOUDAGE À LA MOLETTE, ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.11.2011 JP 2011245677**

(43) Date of publication of application:
**17.09.2014 Bulletin 2014/38**

(73) Proprietor: **Nippon Steel & Sumitomo Metal Corporation**
**Tokyo 100-8071 (JP)**

(72) Inventors:
• **HASEGAWA, Noboru**
**Tokyo 100-8071 (JP)**
• **NAKAJI, Tomohiro**
**Tokyo 100-8071 (JP)**
• **KARUBE, Yoshifumi**
**Tokyo 100-8071 (JP)**
• **YAMAMOTO, Kazuto**
**Tokyo 100-8071 (JP)**

(74) Representative: **Vossius & Partner**
**Patentanwälte Rechtsanwälte mbB**
**Siebertstrasse 3**
**81675 München (DE)**

(56) References cited:
**EP-A1- 2 221 137**   **WO-A1-2011/118560**
**JP-A- H1 133 621**   **JP-A- S61 140 384**
**JP-A- 2011 000 642**

## Description

In a wide range of fields of pipes such as line pipes for petroleum or natural gas; oil country tubular goods; pipes for atomic power, geothermal heat, chemical plants, and mechanical structures; and pipes for general use, electric resistance welded steel pipes are used.

The present invention relates to an operation monitoring apparatus, method, program, and storage medium for monitoring electric resistance welding (such as high frequency resistance welding or induction welding) which, in a manufacturing facility of electric resistance welded steel pipes, forms a steel sheet continuously into a cylindrical shape with a group of rollers while transferring the steel sheet, and heats and melts both of the circumferential ends converging in a V shape, and butts against each other.

[Background Art]

In a manufacturing facility of electric resistance welded steel pipes, a strip-like steel sheet is formed continuously into a cylindrical shape with a group of rollers while the steel sheet is transferred, and both of the circumferential ends converging in a V shape are heated and melted, and are butted against each other.

In order to monitor and control the operation of this electric resistance welding, the proof is required that the weld zone after the butting both of the circumferential ends of the formed steel sheet is sufficiently melted and that it is liquefied as a result of having reached the melting point of the steel sheet (hereinafter, referred to as evidence of melting). Therefore, it is necessary to measure the correct temperature of the weld zone in a real time manner. Here, the weld zone refers to an area in which, after the heated and melted parts of the steel are butted against each other, the fusion zone begins to be discharged from the interior of the sheet thickness to a surface of the steel as a result that upset force is applied with the squeeze rollers.

Conventionally, a radiation thermometer is used to measure the temperature of a predetermined region around the butting area between both of the circumferential ends of the formed steel sheet. In this case, the weld zone may shift in the width direction or in the longitudinal direction. Accordingly, in practice, the predetermined region is set wider than is expected, and, for example, an average temperature of that region is measured.

However, with the setting of the predetermined region wider than is expected, a lower temperature region comes to be included therein. Therefore, the average temperature of the predetermined region is lower than the melting point of the steel. In addition, because the area of the lower-temperature region changes according to the amount of heat input, the sheet thickness, and the like, this temperature measurement is not the correct one for the weld zone, and hence, does not work as evidence of melting.

Furthermore, as ones utilizing an imaging device so as to control electric resistance welding, for example the apparatus and the method for heating a steel pipe described in Patent Document 1 is known, in which an imaging device is used to pick up as an image the two-dimensional luminance distribution in the sheet thickness direction of the weld zone and in the longitudinal direction of end faces of the steel sheet, and then the luminance distribution image that is output from the imaging device is image-processed to extract butting faces. After that, by use of the radiation temperature measuring technique, for example the luminance value is converted to the temperature for each pixel, to thereby obtain the temperature distribution of the butting faces in the sheet thickness direction.

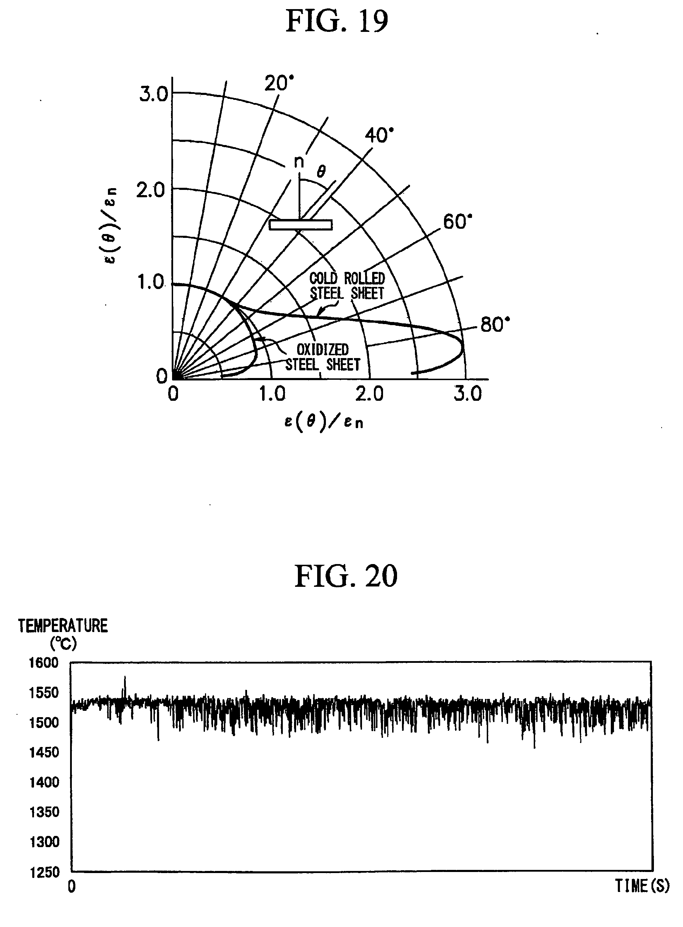

However, the radiance of steel sheets has directional dependence, and steel sheets have an angle at which the radiance is high, as shown for example in FIG 19. In FIG. 19, $\varepsilon_n$ designates vertical emissivity, and $\varepsilon(\theta)$ designates emissivity in the $\theta$ direction. In the photographing arrangement of Patent Document 1, it is required to photograph the steel at a low angle at which the radiance has high angle dependence. On the other hand, in the actual process, the convergent angle and the butting faces vary over time due to the decentering of the rollers, variation of forming, or the like. This leads to a large change in radiance with the changes of the relative position of the photographing optical system relative to the steel. Therefore, in this method, only the relative temperature distribution in the sheet thickness direction can be measured from the photographed luminance levels, and it is difficult to measure absolute temperature.

Next, for example, Patent Document 2 discloses a method of monitoring an electric resistance weld zone, in which luminance distribution in a linear region substantially orthogonal to a welding line is grasped as image signals from the photographing by a luminance sensor, and this operation is monitored, the liner region being preset as a monitoring region at a position 20 to 500 mm spaced from the welding point to the downstream side.

However, with the monitoring at the position 20 to 500 mm spaced from the welding point to the downstream side, namely, at a location on the downstream side away from the position where the welding has finished, indeed minute welding defects can be detected, but it is difficult to prevent cold weld defects for the determination whether the weld zone has reached the melting temperature or not. In addition, because the measurement is carried out at a location on the downstream side from the welding point, oxide films are being formed locally on the surface layer. Therefore, the correct temperature of the weld zone has not been measured where the fusion zones are discharged from the interior of the sheet thickness to the steel surface and eventually joined together on the sheet surface.

Document WO-A-2001/118560 discloses an apparatus for managing operation of electro-resistance-welding that measures the distance between convergence point at which ends of metal plate geometrically intersect and other convergence point that is attaching point of ends of metal plate, and convergence angle of convergence point and determines whether or not distance and convergence angle satisfy a predetermined formula.

[Citation List]

[Patent Literature]

[Patent Document 1] Japanese Unexamined Patent Application, First Publication No. 2009-113070
[Patent Document 2] Japanese Unexamined Patent Application, First Publication No. 2011-036892

[Summary of the Invention]

[Problems to be Solved by the Invention]

The present invention has been achieved in view of the above circumstances and has an object to measure the temperature of temperature measurement region including the weld zone where the melted steel that the upset force is applied with the squeeze rollers begins to be discharged from the interior of the sheet thickness to the surface of the steel, in a real time, stable, and precise manner, to thereby provide evidence of melting for avoiding welding conditions leading to possible unmelting. This makes it possible to offer operational control such as to set the weld conditions to favorable ones. Therefore, it is possible to suppress the occurrence of a deficient area due to unmelting.

[Means for Solving the Problem]

The present inventors have come to adopt the following in order to solve the above problems and achieve the object.

(1) A monitoring apparatus for an electric resistance welding operation according to a first aspect of the present invention is a monitoring apparatus for an electric resistance welding operation that forms a strip-like steel sheet continuously into a cylindrical shape with a group of rollers while the steel sheet is being transferred, and heats and melts both of a circumferential ends of the formed steel sheet converging in a V shape, and butts against each other, including: an image obtaining unit that takes a photograph from at least either one of an external surface side and an internal surface side of the steel sheet when the steel sheet is formed into the cylindrical shape, to thereby obtain an image of a region including a Vee convergence section, which is an area where both of the circumferential ends converge in the V shape; either one of a contact point detection unit that, based on the image obtained by the image obtaining unit, detects a contact point between both of the circumferential ends of the formed steel sheet converging in the V shape, and a Vee convergence point detection unit that, based on the image obtained by the image obtaining unit, detects a Vee convergence point, which is a geometrical convergence point between both of the circumferential ends of the formed steel sheet converging in the V shape; a temperature measurement region setting unit that, based on either one of a position of the contact point detected by the contact point detection unit and a position of the Vee convergence point detected by the Vee convergence point detection unit, sets a temperature measurement region including a weld zone in which a fusion zone in an interior of a sheet thickness of the steel sheet begins to be discharged to a surface of the steel sheet; a luminance level computation unit that calculates a luminance level of the temperature measurement region having been set by the temperature measurement region setting unit; a temperature conversion unit that, based on a preset temperature conversion data, converts the luminance level of the temperature measurement region calculated by the luminance level computation unit to a temperature of the temperature measurement region; and a determination unit that determines whether a temperature of the temperature measurement region is more than or equal to a predetermined lower limit value.
(2) In the monitoring apparatus for an electric resistance welding operation as set forth above in (1), in the case of detecting the contact point by the contact point detection unit, the temperature measurement region setting unit may set the temperature measurement region so as to include the weld zone on the assumption that the weld zone is present at a position spaced from the contact point to a downstream side by a given distance.
(3) In the monitoring apparatus for an electric resistance welding operation as set forth above in (2), in a case of detecting the contact point by the contact point detection unit, the contact point detection unit may, based on the image obtained by the image obtaining unit, primarily detects the contact point between both of the circumferential ends of the formed steel sheet converging in the V shape; based on the image obtained by the image obtaining unit, linearly approximates both of the circumferential ends of the formed steel sheet converging in the V shape, and determines whether or not a split region, which is a split-apart area of a tip of the Vee convergence section on a downstream side, is present on an extended line of a bisector of a Vee convergence angle formed by the approximation lines meeting each other; and when it is determined that the split region is not present, detects the primarily detected contact point as the contact point, while when it is determined that the split region is present, detects a farthest downstream point of the split region as the contact point.

(4) The monitoring apparatus for an electric resistance welding operation as set forth above in any one of (1) to (3) may further include a mask image creation unit that creates a mask image for excluding a high luminance level region with the luminance level more than or equal to a predetermined value from the image obtained by the image obtaining unit.

(5) A monitoring method of an electric resistance welding operation according to a second aspect of the present invention is a monitoring method of an electric resistance welding operation that forms a strip-like steel sheet continuously into a cylindrical shape with a group of rollers while the steel sheet is being transferred, and heats and melts both of a circumferential ends of the formed steel sheet converging in a V shape, and butts against each other, including: an image obtaining step of taking a photograph from at least either one of an external surface side and an internal surface side of the steel sheet when the steel sheet is formed into the cylindrical shape, to thereby obtain an image of a region including a Vee convergence section, which is an area where both of the circumferential ends converge in the V shape; either one of a contact point detection step of, based on the image obtained by the image obtaining step, detecting a contact point between both of the circumferential ends of the formed steel sheet converging in the V shape, and a Vee convergence point detection step of, based on the image obtained by the image obtaining step, detecting a Vee convergence point, which is a geometrical convergence point between both of the circumferential ends of the formed steel sheet converging in the V shape; a temperature measurement region setting step of, based on either one of a position of the contact point detected by the contact point detection step and a position of the Vee convergence point detected by the Vee convergence point detection step, setting a temperature measurement region including a weld zone in which a fusion zone in an interior of a sheet thickness of the steel sheet begins to be discharged to a surface of the steel sheet; a luminance level computation step of calculating a luminance level of the temperature measurement region having been set by the temperature measurement region setting step; a temperature conversion step of, based on a preset temperature conversion data, converting the luminance level of the temperature measurement region calculated by the luminance level computation step to a temperature of the temperature measurement region; and a determination step of determining whether a temperature of the temperature measurement region is more than or equal to a predetermined lower limit value.

(6) A program for monitoring an electric resistance welding operation according to a third aspect of the present invention is a program for monitoring an electric resistance welding operation that forms a strip-like steel sheet continuously into a cylindrical shape with a group of rollers while the steel sheet is being transferred, and heats and melts both of a circumferential ends of the formed steel sheet converging in a V shape, and butts against each other, comprising: an image obtaining section that takes a photograph from at least either one of an external surface side and an internal surface side of the steel sheet when the steel sheet is formed into the cylindrical shape, to thereby obtain an image of a region including a Vee convergence section, which is an area where both of the circumferential ends converge in the V shape; either one of a contact point detection section that, based on the image obtained by the image obtaining section, detects a contact point between both the circumferential ends of the formed steel sheet converging in the V shape, and a Vee convergence point detection section that, based on the image obtained by the image obtaining section, detects a Vee convergence point, which is a geometrical convergence point between both of the circumferential ends of the formed steel sheet converging in the V shape; a temperature measurement region setting section that, based on either one of a position of the contact point detected by the contact point detection section and a position of the Vee convergence point detected by the Vee convergence point detection section, sets a temperature measurement region including a weld zone in which a fusion zone in an interior of a sheet thickness of the steel sheet begins to be discharged to a surface of the steel sheet; a luminance level computation section that calculates a luminance level of the temperature measurement region having been set by the temperature measurement region setting section; a temperature conversion section that, based on a preset temperature conversion data, converts the luminance level of the temperature measurement region calculated by the luminance level computation section to a temperature of the temperature measurement region; and a determination section that determines whether a temperature of the temperature measurement region is more than or equal to a predetermined lower limit value.

(7) A storage medium according to a fourth aspect of the prevent invention is a storage medium in which the program as set forth above in (6) is stored.

[Effects of the Invention]

According to the aspects as set forth above in (1) to (7), it is possible to set the temperature measurement region so as to include the weld zone where the melted steel begins to be discharged from the interior of the sheet thickness to the surface of the steel sheet. Consequently, the temperature of the weld zone can be measured in a real time, stable, and precise manner, to thereby provide evidence of melting for avoiding welding conditions leading to possible unmelting. This makes it possible to offer operational control such as to set the weld conditions to favorable ones. Therefore, it is possible to suppress the occurrence of deficient area due to unmelting.

[Brief Description of the Drawings]

FIG. 1 is a diagram showing a manufacturing facility of electric resistance welded steel pipes, and a structure of an operation monitoring apparatus for electric resistance welding according to a first embodiment.
FIG. 2 is a flow chart showing a method of monitoring the operation with the operation monitoring apparatus for electric resistance welding according to the first embodiment.
FIG 3 is a flow chart showing the contact point detection processing in FIG 2.
FIG. 4 is a schematic diagram showing an image taken by a photographing apparatus.
FIG. 5A is a first diagram for explaining a two-stage converging phenomenon and how to set a temperature measurement region.
FIG. 5B is a second diagram for explaining a two-stage Vee convergence phenomenon and how to set a temperature measurement region.
FIG. 5C is a diagram for explaining a Vee convergence point, a contact point, and a weld zone at the time when the fusion zone begins to be discharged to the surface from the interior of the sheet thickness, and for explaining an electric resistance welding phenomenon.
FIG 6 is a diagram showing an example of temperature conversion data.
FIG. 7 is a diagram for explaining how to create temperature conversion data.
FIG 8 is a characteristic diagram showing a relationship between temperature on the weld surface of the steel sheet and time.
FIG 9A is a first schematic diagram showing an image in which image processing is being performed and a contact point is being detected in the first embodiment.
FIG 9B is a second schematic diagram showing an image in which image processing is being performed and a contact point is being detected in the first embodiment
FIG 9C is a third schematic diagram showing an image in which image processing is being performed and a contact point is being detected in the first embodiment.
FIG 9D is a fourth schematic diagram showing an image in which image processing is being performed and a contact point is being detected in the first embodiment.
FIG 10 is a schematic diagram showing an example of binarized image from which no blob in the Vee convergence section is extracted.
FIG. 11A is a first schematic diagram showing an image for explaining the case where the x direction of the image deviates from the actual transfer direction of the steel sheet.
FIG. 11B is a second schematic diagram showing an image for explaining the case where the x direction of the image deviates from the actual transfer direction of the steel sheet.
FIG 12A is a first schematic diagram showing an image in which image processing is being performed and a contact point is being detected in a second embodiment.
FIG. 12B is a second schematic diagram showing an image in which image processing is being performed and a contact point is being detected in the second embodiment.
FIG. 12C is a third schematic diagram showing an image in which image processing is being performed and a contact point is being detected in the second embodiment.
FIG. 13 is a flow chart showing a method of monitoring the operation with an operation monitoring apparatus on electric resistance welding according to the second embodiment.
FIG 14A is a first schematic diagram showing an image in which image processing is being performed and a mask image is being created in a third embodiment.
FIG. 14B is a second schematic diagram showing an image in which image processing is being performed and a mask image is being created in the third embodiment.
FIG 15 is a diagram showing a manufacturing facility of electric resistance welded steel pipes and a structure of an operation monitoring apparatus for electric resistance welding according to the third embodiment.

FIG. 16 is a flow chart showing an operation monitoring method by an operation monitoring apparatus for electric resistance welding according to the third embodiment.

FIG. 17 is a schematic diagram showing a mask image.

FIG. 18 is a characteristic diagram showing a result of measured temperature in a temperature measurement region of Example, the temperature measurement region having been set by applying the present invention.

FIG. 19 is a characteristic diagram showing directional dependence of radiance of steel sheets.

FIG. 20 is a characteristic diagram showing a result of measured temperature in a temperature measurement region of Comparative Example, the temperature measurement region having been set for comparison.

[Description of Embodiments]

Hereunder is a description of preferred embodiments of the present invention with reference to the appended drawings.

(First embodiment)

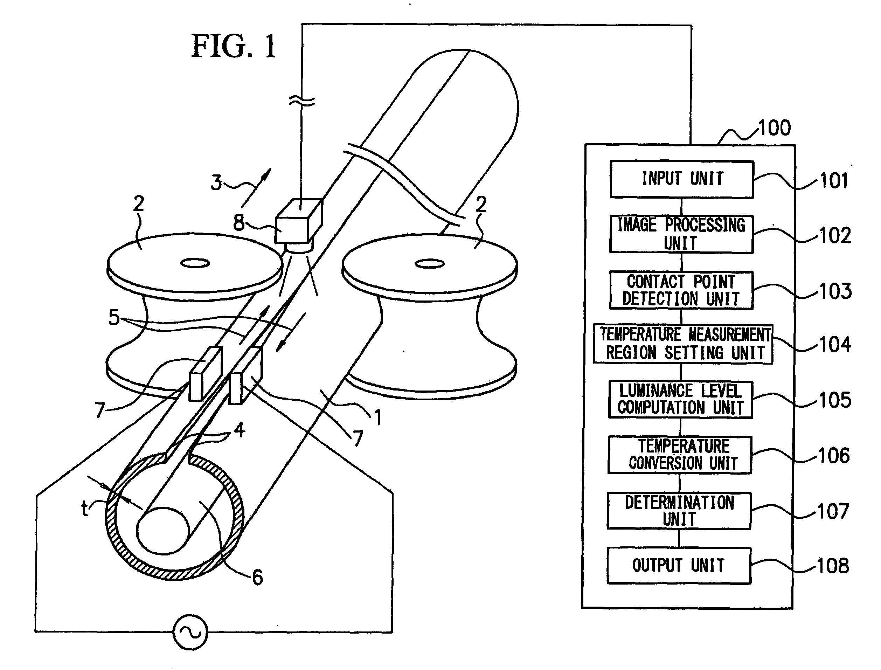

Firstly, with reference to FIG. 1, an outline of the manufacturing facility of electric resistance welded steel pipes will be described. As shown in FIG. 1, a strip-like steel sheet 1 is formed into a cylindrical shape continuously with a group of rollers (not shown in the figure) while it is transferred in a direction 3 (transfer direction). An impeder 6 is arranged in the inside of the steel sheet 1 formed into a cylindrical shape. While a high frequency electric current 5 is passed by a pair of contact tips 7 (high frequency resistance welding) or by an induction coil which is not shown in the figure (induction welding), upset force is applied to the steel sheet 1 by squeeze rollers 2. As a result, it is possible to heat and to melt both of the circumferential ends 4, 4 (hereinafter, referred to simply as ends) of the steel sheet 1, and to butt against each other while the ends 4,4 are converged in a V shape. This makes it possible to perform fusion joint the steel sheet 1 (electric resistance welding (ERW)).

Above the steel sheet 1, there is arranged a photographing apparatus 8. The photographing apparatus 8 photographs a natural light pattern (radiation pattern) of a region on the external surface of the cylindrically formed steel sheet 1, which region includes the Vee convergence section that converges in a V shape. As the photographing apparatus 8, for example a three-CCD color camera with $1600 \times 1200$ pixels is used. The photographing apparatus 8 takes pictures under the condition that: the imaging field of view has a width of 30 [mm] or longer and a length of 50 to 100 [mm]; the shooting resolution is 50 to 100 [$\mu$m/pixel]; the frame rate is 30 [fps] or greater; and the exposure time is 1/5000 [second] or shorter. The data of the image taken by the photographing apparatus 8 is input to an operation monitoring apparatus for electric resistance welding 100. Note that the natural light pattern of a region on the internal surface of the cylindrically-formed steel sheet 1, which region includes the Vee convergence section, may be photographed.

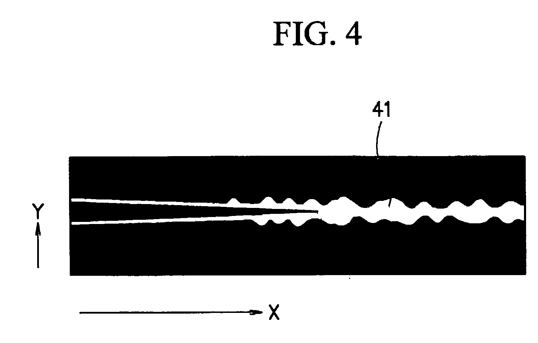

In the operation monitoring apparatus for electric resistance welding 100, the data of the image taken by the photographing apparatus 8 is input to an input unit 101 as an image obtaining device. From the photographing apparatus 8, an image with the transfer direction of the steel sheet 1 as the X direction and the butting direction of the steel sheet 1 as the Y direction is input thereto. FIG. 4 shows a schematic diagram where an image taken by the photographing apparatus 8 is pictorially represented. In the image taken by the photographing apparatus 8, a luminous region 41 appears where regions at elevated temperatures along both ends 4, 4 of the steel sheet 1 are observed as natural light. Furthermore, on the downstream side in the transfer direction, parts of the regions of the ends 4, 4 have an increase in temperature to the melting point or higher to be melted with each other, and then a wave-like pattern flowing out in the sheet width direction is produced by electromagnetic pinch force.

An image processing unit 102 subjects the image, which has been input to the input unit 101, to image processing such as red color component extraction processing or binarization processing.

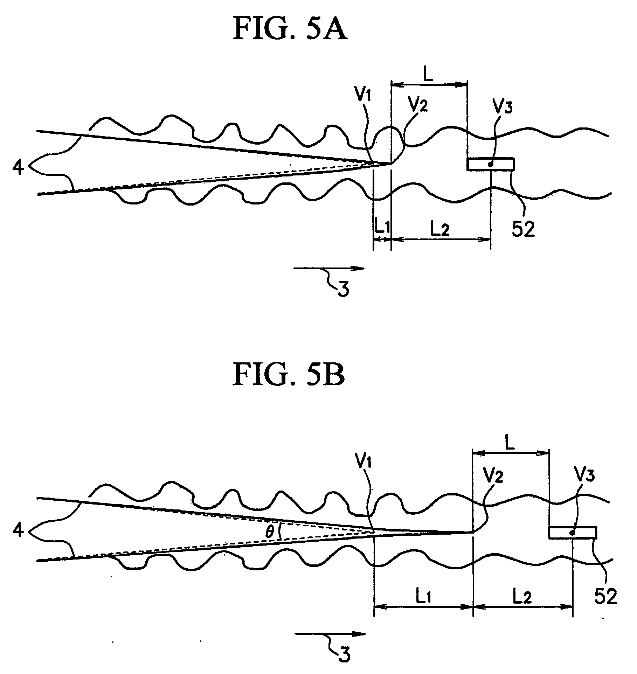

A contact point detection unit 103 detects, on the image processed by the image processing unit 102, a contact point $V_2$ at which the ends 4, 4 of the steel sheet 1 that converge in a V shape are brought into physical abutment (contact) with each other. As shown in FIG. 5A and FIG. 5B with dashed lines, there is a Vee convergence point $V_1$ at which the ends 4, 4 of the steel sheet 1 that converge in a V shape geometrically meet each other. However, a two-stage Vee convergence phenomenon is observable where, in actuality, the ends 4, 4 are not brought into abutment with each other at the Vee convergence point $V_1$, but on the downstream side of the Vee convergence point $V_1$, a contact point $V_2$ is present at which the ends 4, 4 of the steel sheet 1 are brought into physical abutment with each other.

In the case where the conditions other than the amount of heat input are the same, a distance $L_1$ between the Vee convergence point $V_1$ and the contact point $V_2$ changes according to the amount of heat input. It is verified that the larger the amount of heat input is, the longer the distance $L_1$ tends to be. That is to say, the farther the Vee convergence point $V_1$ and the contact point $V_2$ tend to be spaced away from each other. FIG. 5A and FIG. 5B pictorially represent the two-stage Vee convergence phenomenon. As shown in FIG. 5A, if the amount of heat input is small, the Vee convergence point $V_1$ and the contact point $V_2$ are close to each other. In this case, there is a possibility that the melting at the central area of a sheet thickness t of the end 4 of the steel sheet 1 is insufficient, which may lead to the occurrence of unmelting. On the other hand, as shown in FIG. 5B, if the amount of heat input is large, the Vee convergence point $V_1$ and the contact point $V_2$ are spaced away from each other. With the distance $L_1$ between the Vee convergence point $V_1$ and the contact point $V_2$ being made appropriate, the melting at the central area of the sheet thickness t of the end 4 of the steel sheet 1 becomes appropriate, allowing for normal welding.

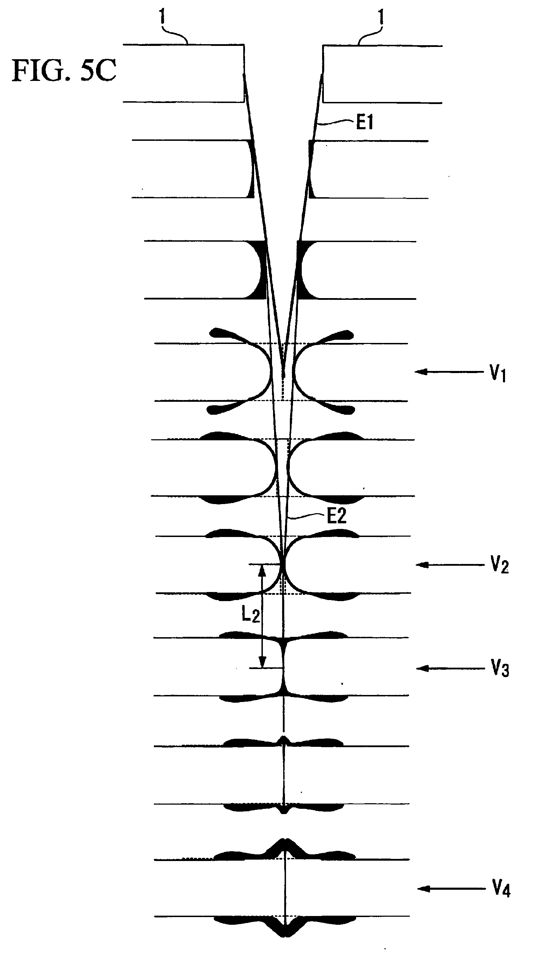

A temperature measurement region setting unit 104 sets a temperature measurement region 52 based on the position of the contact point $V_2$ that has been detected by the contact point detection unit 103. As a result of earnest investigations by the present inventors, when the steel sheet 1 is performed fusion joint while it is converged in a V shape as shown in FIG. 5C, there occurs a phenomenon, in the two-stage Vee convergence phenomenon that accounts for the electric resistance welding phenomenon, where on the downstream side of the Vee convergence point $V_1$ at which the ends geometrically meet each other, melting starts at sheet edge areas by high frequency heating and melting, and the fusion zone flows in the surface direction by electromagnetic pinch force. Both of the sheet edge areas should be brought into abutment with each other at the Vee convergence point $V_1$ at which the ends geometrically meet each other, as is shown with thick lines E1 in FIG 5C. However, if the above melting spreads over the whole region of the sheet thickness t, a phenomenon occurs where two types of convergent angle are provided. Consequently, on a farther downstream side than the Vee convergence point $V_1$ at which the ends geometrically meet each other, a physical contact point $V_2$ at which the ends meet each other along thin lines E2 in FIG 5C will be present. In addition, it has been found out that on a still farther downstream side, there is a weld zone $V_3$ at which fusion zones in the interior of the sheet thickness t begins to be discharged to the surface of the steel sheet when the upset force is applied with the squeeze rollers 2. As a result of the measurement of the distance by visual observation, it has been verified that if the conditions of the sheet thickness t and the like of the steel sheet 1 are the same, the weld zone $V_3$ is located on the downstream side from the position of the contact point $V_2$ by a given distance $L_2$ irrespective of the amount of heat input so long as the operation is within a practical range. Moreover, experiments show that the sheet surface of the weld zone $V_3$ is substantially flat. This has revealed that it is possible to correctly convert the luminance to the temperature, solving the conventional problem that the radiance of steel sheets has directional dependence. It has been verified that a solidification area $V_4$ on the downstream side of the weld zone $V_3$ has asperity greater than that of the sheet surface of the weld zone $V_3$. In the solidification area $V_4$, solidification of the surface starts after completion of the process where the fusion zone in the interior of the sheet thickness t after welding begins to be discharged to the surface of the steel sheet.

Therefore, the temperature measurement region setting unit 104 sets the temperature measurement region 52 so as to include the weld zone $V_3$ on the assumption that the weld zone $V_3$ is present on the downstream side from the position of the contact point $V_2$, which has been detected by the contact point detection unit 103, by a given distance $L_2$. In the examples of FIG. 5A and FIG. 5B, the long and thin, rectangular temperature measurement region 52 which extends in the X direction is set with a position on the downstream side from the position of the contact point $V_2$ by a distance L being its starting point; and the weld zone $V_3$ is positioned so as to be at the center along the longitudinal direction of the temperature measurement region 52. A plurality of values may be prepared for the distance L according to the sheet thickness t and the like of the steel sheet 1 based on the past knowledge and the like, and an appropriate value may be selected and set according to the operational conditions such as the sheet thickness t and the like of the steel sheet 1. Furthermore, as for the length and the width of the temperature measurement region 52, pieces of data are previously obtained for every sheet thickness t, and the length and the width are set according to the operational conditions such as the sheet thickness t and the like of the steel sheet 1.

In the examples of FIG. 5A and FIG. 5B, the description has been for the case where the distance L is set so that the weld zone $V_3$ is positioned at the center along the longitudinal direction of the temperature measurement region 52, by way of example. However, the structure is not limited to this. As another example, in the case where the weld zone $V_3$ is located on the downstream side from the position of the contact point $V_2$ by $L_2$=10 mm, the temperature measurement region 52 is set in a range on the downstream side from the position of the contact point $V_2$ by 7.5 mm to 15 mm in consideration of the variation in the contact point $V_2$ and the like due to image processing. That is, if L=7.5 mm, the length of the temperature measurement region 52 is set to 7.5 mm. The width of the temperature measurement region 52 is set to 2 mm in consideration of the width of the luminous region 41 and the like.

Alternatively, in order to find the temperature measurement region 52, the Vee convergence point $V_1$ may be used instead of the contact point $V_2$. If the sheet thickness t and the pipe diameter are constant, the present inventors have investigated and found that the distance between the Vee convergence point $V_1$ and the contact point $V_2$ is dependent only on the amount of heat input. The amount of heat input can be measured from the voltage and current applied to the steel. Therefore, if the distance between the Vee convergence point $V_1$ and the contact point $V_2$ is actually measured in advance with the amount of heat input being changed for every sheet thickness t and pipe diameter, and the actual measured value is added to the distance $L_2$ between the contact point $V_2$ and the weld zone $V_3$, then it is possible to obtain the same effect as that of the setting of the temperature measurement region 52 with reference to the contact point $V_2$.

Based on the data of the image taken by the photographing apparatus 8, a luminance level computation unit 105 calculates an average luminance level of the temperature measurement region 52, which has been set by the temperature measurement region setting unit 104. In the present embodiment, the average luminance level of the temperature measurement region 52 is calculated. However, a maximum luminance level may be calculated.

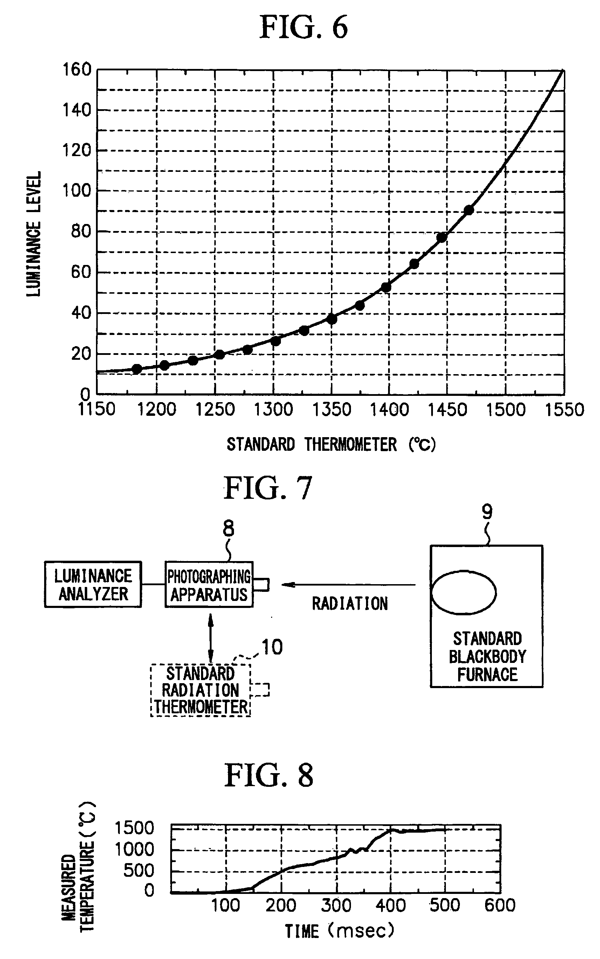

A temperature conversion unit 106 converts the average luminance level of the temperature measurement region 52, which has been calculated by the luminance level computation unit 105, to temperature, based on the temperature conversion data which is the preset calibration data. FIG. 6 shows an example of temperature conversion data. When the temperature conversion data is created, a standard blackbody furnace 9, which is capable of increasing in temperature to a point close to that of the melting point of steel (around 1500°C although it is different according to the types of steel), and a standard radiation thermometer 10 are used, as shown in FIG. 7. The photographing apparatus 8 is installed in front of the standard blackbody furnace 9 in accordance with the photographing conditions (distance, stop, shutter speed, camera gain, and the like) being adapted to the actual conditions, images of the standard blackbody furnace 9 are photographed while its temperature is being changed, and then the photographed images are stored. Next, as shown in FIG. 6, a correlation curve is drawn between the radiation temperature measured by use of the standard radiation thermometer 10 at every temperature being as X-axis and the luminance level of the photographed images analyzed by a luminance analyzer 11, with the X-axis representing the radiation temperature and the Y-axis representing the luminance level. The values between the measured temperatures are complemented by use of the coefficients (offset and magnification ratio) of the Planck's radiation formula shown below. $B_v$ is a spectral radiance of the electromagnetic waves emitted from a black body, $v$ is a frequency, T is a temperature, h is the Planck constant, k is the Boltzmann constant, and c is the speed of light.

[Formula 1]

$$B_v = \frac{2hv^3 / c^2}{\exp[hv / kT] - 1}$$

For conversion to luminance level, the spectral radiance is multiplied by a correction coefficient, and the noise level of the camera is added to the resultant value. At this time, the emissivity of the steel is not 1. Therefore, the natural light pattern of the region including the actual Vee convergence section of the steel sheet 1 is photographed. The temperature measurement region is manually extracted therefrom, and its luminance level is measured. Then, a correction coefficient is found that may be suitable for the luminance level of the melted steel. Thus, it is possible to carry out the conversion from the luminance level to the absolute temperature in consideration of emissivity. It has been found that from the laboratory test where the ends 4 of the steel sheet 1 were welded with a pair of thermocouple being provided on the edges of the ends 4, and the temperature was measured, it has been found that the temperature does not rise to the melting point or higher, as shown in FIG. 8. Therefore, a luminance level after the temperature measured by the thermocouple ceases to increase, that is, the luminance level at the melting point may be measured, and the correction coefficient may be determined so as to be suitable for the luminance level. So long as it is known that the temperature has securely reached the melting point, there is no need to provide a thermocouple. A luminance level may be measured and the correction coefficient may be determined so as to be suitable for the luminance level.

A determination unit 107 determines whether a temperature of the temperature measurement region 52 obtained by the temperature conversion unit 106 is more than a lower limit value. The lower limit value is a threshold value for determining whether the amount of heat input is enough or not. If a temperature of the temperature measurement region 52 is lower that the lower limit value, the determination unit 107 determines that the heat input is insufficient.

An output unit 108 displays, for example, an image treated in the respective units 101 to 107 on a display apparatus (not shown in the figure). In addition, if the determination unit 107 has determined that the heat input is insufficient, the output unit 108 outputs, for example, an alarm.

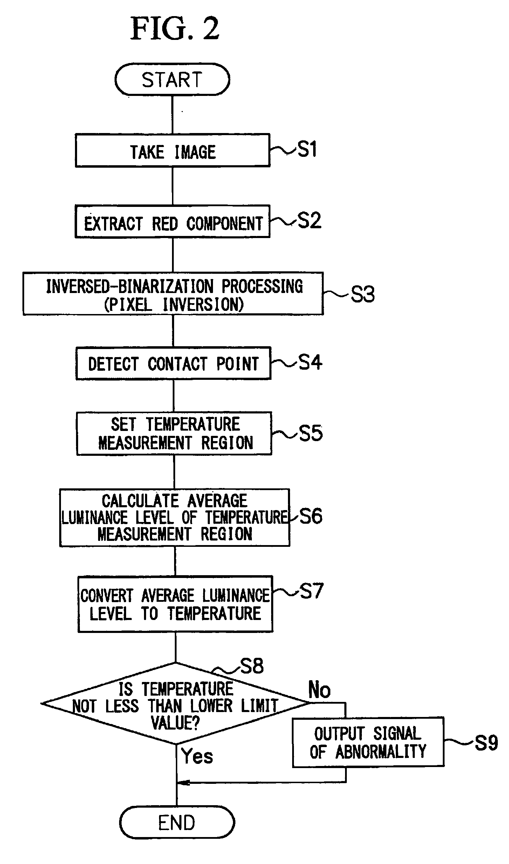

Next, with reference to FIG 2, an operation monitoring method by the operation monitoring apparatus for electric resistance welding 100 according to the first embodiment will be described in detail. The photographing by the photographing apparatus 8 is continuously performed at regular intervals. Each photographed image is referred to as a frame. When image data is input from the photographing apparatus 8 via the input unit 101 (Step S1), the image processing unit 102 extracts a red component (wavelength: 580 nm to 700 nm) from the image data to make the contrast clear (Step S2).

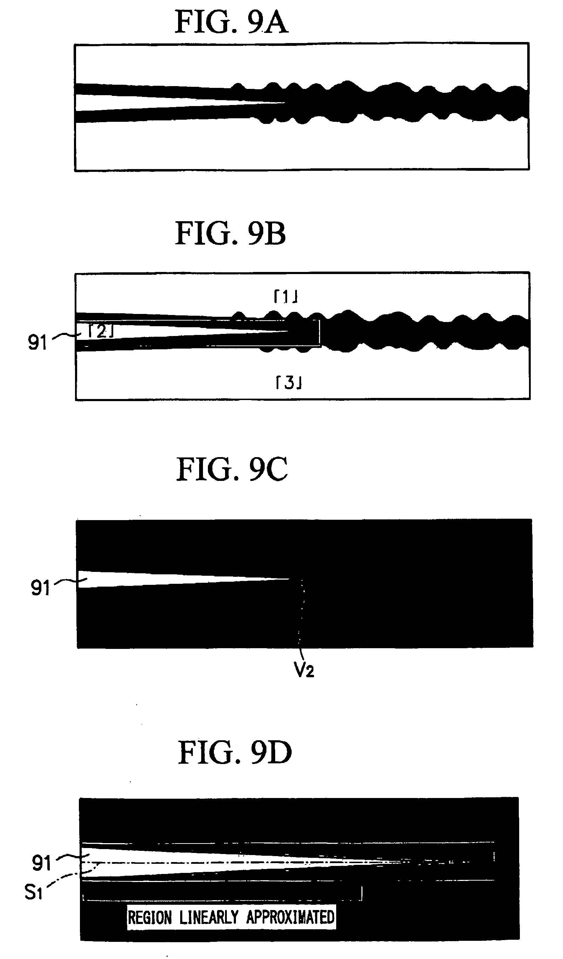

Subsequently, the image processing unit 102 subjects the image data, from which the red component has been extracted in Step S2, to inversed-binarization processing (pixel inversion) (Step S3). Here, "0" is assigned to the pixels whose luminance level is more than a preset threshold value, while "1" is assigned to the pixels whose luminance level is lower than a given value. The threshold value at this time should be a level more than that of the disturbance factor such as a noise level of the camera and reflection from the top roller, and be adjusted to a range that allows the shapes of the fusion zone and the steel ends to be captured. For example, if the melted region is at level 160 in 255 levels of gray and the disturbance factor is at level 30, then approximately level 40 is selected. FIG. 9A shows a schematic diagram in which a binarized image is pictorially represented.

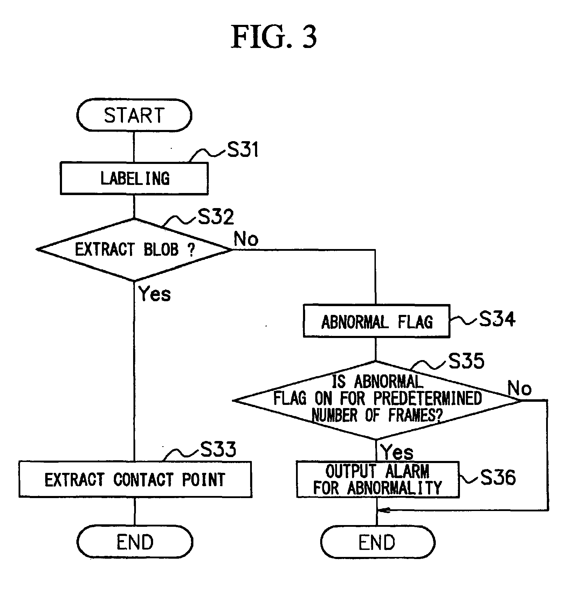

Subsequently, the contact point detection unit 103 detects a contact point $V_2$ on the binarized image created in Step S3 (Step S4). FIG 3 shows a specific example of the contact point detection processing in Step S4. Firstly, as shown in FIG 9B, labeling that attaches a label to each blob is performed (Step S31), and it is determined whether the blob(s) that meet the predetermined condition(s) have been extracted or not (Step S32). Here, a blob is a region where any one of the four pixels adjacent to a "1" pixel in a binarized image on its top, bottom, left and right, or any one of the eight pixels further including four pixels adjacent thereto in the four oblique directions is "1," and all the pixels are connected into one block. In addition, the labeling refers to extracting a specified blob after attaching the same label number to each blob, and further extracting the position (the maximum point and minimum point in the X-coordinate, and the maximum point and minimum point in the Y-coordinate), width, length, area, and the like in the image. For example, in FIG. 9B, three blobs are labeled respectively as "1," "2," and "3." If, in Step S32, a blob that meets the predetermined condition(s) is found, then the blob (here, the label "2") is extracted as a blob 91 in the Vee convergence section where the ends 4, 4 converge in a V shape (see FIG 9C), and the shape information such as the coordinates and area is obtained. For example, in the binarized image shown in FIG. 9A, if there is a blob that is in contact with the left side and also has the predetermined area conditions, then the blob is extracted as the blob 91 in the Vee convergence section. As the predetermined area conditions, for example the condition that the blob has an area (in actual dimension) of 15 mm$^2$ to 150 mm$^2$ and/or the condition that its circumscribed rectangle has an actual dimension of 25 mm$^2$ to 320 mm$^2$ may be set.

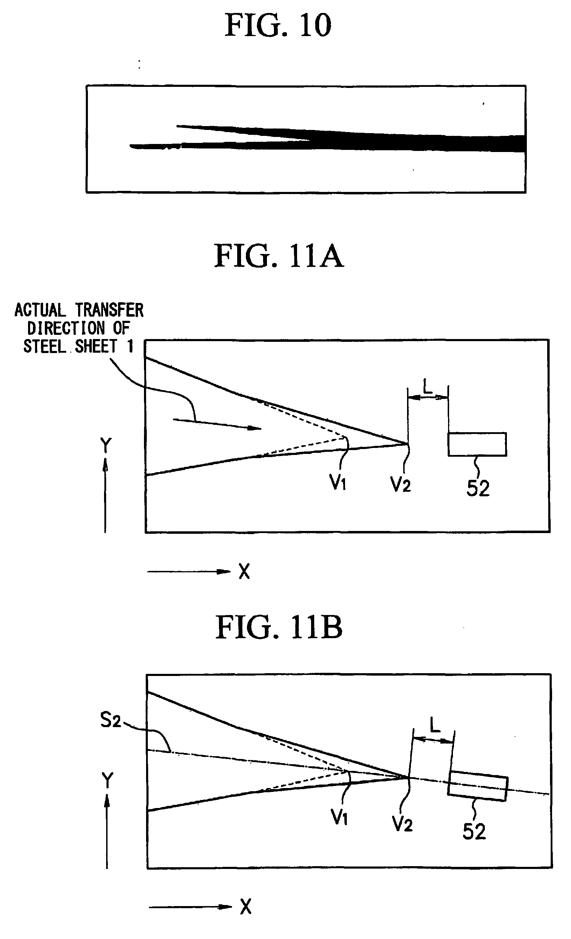

If a blob that meets the predetermined condition(s) is extracted in Step S32, then the tip (that is, the farthest downstream point) of the extracted blob 91 in the Vee convergence section is detected as a contact point $V_2$, as shown in FIG 9C (Step S33). If no blob that meets the predetermined conditions is extracted in Step S32, then an abnormal flag is set (Step S34). For example, in the case where the amount of heat input is small, no blob in the Vee convergence section is extracted (see FIG. 10). Therefore, the process moves to Step S34. Then, it is determined whether the abnormal flag is on for the predetermined number of frames (Step S35). If the abnormal flag is on for the predetermined number of frames, then an alarm for abnormality is output (Step S36).

Returning to the description of FIG 2, the temperature measurement region setting unit 104 sets, on the binarized image created in Step S3, a temperature measurement region 52 which starts at a position on the downstream side by the distance L from the contact point $V_2$ detected in Step S4 (Step S5).

As has been described above, the temperature measurement region 52 is set in a long and thin, rectangular shape with a length and width that are set in accordance with the operational conditions of the sheet thickness t of the steel sheet 1 and the like. In this case, the temperature measurement region 52 may have simply a long and thin, rectangular shape extending in the X direction of the image. However, there are cases where during the transfer process of the steel sheet 1, the steel sheet 1 swings left and right in the transfer direction or is twisted. At that time, as shown in FIG. 11A, the X direction of the image deviates from the actual transfer direction of the steel sheet 1. Therefore, if a temperature measurement region 52 has simply a long and thin, rectangular shape extending in the X direction of the image, there are cases where the rectangular temperature measurement region 52 diagonally deviates from the actual transfer direction of the steel sheet 1.

Therefore, the ends 4, 4 of the steel sheet 1 are firstly searched for in the blob 91 in the Vee convergence section that has been used in the detection of the contact point $V_2$. As shown in 9D which is a zoomed in view of FIG. 9C, the points at which the value changes from "1" to "0" are searched for from the straight line $S_1$, which passes through the farthest downstream point in the transfer direction of the blob 91 in the Vee convergence section and is in parallel with the X direction of the image, respectively to the +Y direction and -Y direction, and those points are made the ends 4 of the steel sheet 1. This action is repeated in a predetermined range in the V converging direction (X direction), for example, in a 2/3 of the range from the left side (upstream side in the transfer direction) of the binarized image to the tip of the blob 91 in the Vee convergence section. Subsequently, in the predetermined range, the ends 4, 4 of the steel sheet 1 are linearly approximated. Then, on an extended line of a bisector $S_2$ of a Vee convergence angle formed by the approximation lines meeting each other, a long and thin, rectangular temperature measurement region 52 is set that extends in the direction of the bisector $S_2$, as shown in FIG 11B.

Accordingly, it is possible to prevent the inconvenience in which the rectangular temperature measurement region 52 deviates diagonally from the actual transfer direction of the steel sheet 1.

Note that the above predetermined region is not always "2/3 of the range from the left side." In the case where the position of the Vee convergence point $V_1$ is shifted to the upstream side in the transfer direction in accordance with the operational conditions, the ratio for the range of the predetermined region may be appropriately set to a proper value such as a smaller value, for example, to 1/2. Furthermore, when the ends 4 of the steel sheet 1 are searched for, for example the points at which the value changes from "0" to "1" may be searched for from the top and bottom positions to the internal side in the Y direction in the image shown in FIG 9D. However, it is known that the blob 91 in the Vee convergence section appears in the vicinity of the center in the Y direction of the image. Consequently, starting the search at the topmost position and the bottommost position in the image makes part of the processing wasteful. Therefore, the points at which the value changes from "0" to "1" are searched for from the internal side of the blob 91 in the Vee convergence section to the +Y direction and the -Y direction, to thereby make the processing time shorter. However, because a position in the Y direction of the wide part (left side in the image) of the blob 91 in the Vee convergence section can be found out through the labeling, it is possible to make the processing time shorter also in the case where the points at which the value changes from "0" to "1" are searched for from the top and bottom positions in the image to the internal side, if the points at which the value changes from "0" to "1" are searched for from the position in the Y direction or from its neighboring position to the internal side.

Returning to the description of FIG 2, the luminance level computation unit 105 calculates an average luminance level of the temperature measurement region 52, which has been set in Step S5, based on the captured image data by the photographing apparatus 8 (Step S6).

Subsequently, the temperature conversion unit 106 converts the average luminance level of the temperature measurement region 52, which has been calculated in Step S6, to temperature based on the preset temperature conversion data (see FIG 6) (Step S7).

Subsequently, the determination unit 107 determines whether a temperature of the temperature measurement region 52, which has been obtained in Step S7, is more than the lower limit value (Step S8). If a temperature of the temperature measurement region 52 is more than the lower limit value, then it is determined to be normal. If the temperature is less than the lower limit value, then it is determined to be insufficient heat input. In the case where a temperature of the temperature measurement region 52 is less than the lower limit value, the output unit 108 outputs a signal of abnormality such as an alarm (Step S9). In this case, a signal of abnormality may be output, for example only if a temperature of the temperature measurement region 52 less than the lower limit value is detected consecutively for the predetermined number of frames (for example, approximately 10 frames to 15 frames) or for a predetermined period of time (for example, approximately 0.5 seconds). After the output of a signal of abnormality, a feedback control over the operation may be performed. As a result, through an increase in the amount of heat input leading to a decrease in the number of defective sites, it is possible to improve yields.

As has been described above, it is possible to set the temperature measurement region 52 as a temperature measurement region so as to include the weld zone $V_3$, which is a point at which the discharge begins. This makes it unnecessary to make the temperature measurement region 52 wider than is required, and hence, makes it possible not to include low temperature regions. Furthermore, because the temperature can be measured based on an image of the temperature measurement region 52 taken from above and also because the weld zone $V_3$ is flat without asperity as shown in FIG 5B, it is possible to reduce the influence of the directional dependence of the radiance of steel sheets. As a result, a temperature of the temperature measurement region 52 is measured in a real time, stable, and precise manner, to thereby make it possible to offer evidence of melting for avoiding the weld conditions leading to possible unmelting.

(Second embodiment)

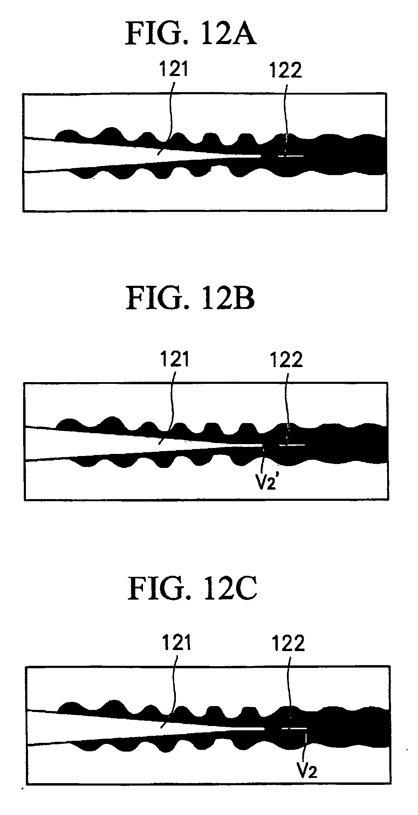

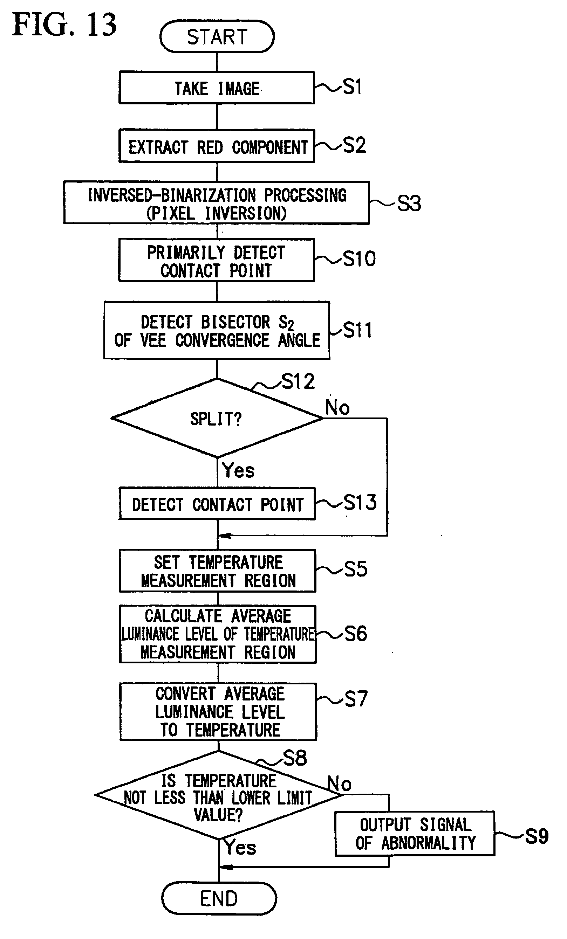

Next is a description of a second embodiment with reference to FIG 12A, FIG. 12B, FIG. 12C, and FIG 13. When a natural light pattern of the region including a Vee convergence section on the external surface of a steel sheet 1 that is formed into a cylindrical shape is photographed, there are cases where the downstream tip of the Vee convergence section is photographed as if it is split apart because the luminance level does not fully fall at the downstream tip of the Vee convergence section. FIG 12A, FIG. 12B, and FIG 12C show a schematic diagram where a binarized image is pictorially represented, in which the downstream tip of the Vee convergence section is photographed as if it is split apart.

In the second embodiment, it is possible to correctly set a temperature measurement region 52 so as to include the weld zone $V_3$ even in the case of an image where the downstream tip of the Vee convergence section is photographed as if it is split apart. Here, the part of the downstream tip of the Vee convergence section that has been split apart on the image is referred to as a split region 122. As shown in FIG 12A, FIG. 12B, and FIG 12C, if a split region 122 is present at the tip of the Vee convergence section, then the contact point $V_2$ should be set not at the tip of an apparent Vee convergence section 121, but at the farthest downstream point of the split region 122.

Hereunder is a detailed description of the second embodiment. Note that the structure of an operation monitoring apparatus for electric resistance welding 100 is the same as that of the first embodiment, and will not be repetitiously explained here.

With reference to FIG 13, an operation monitoring method by the operation monitoring apparatus for electric resistance welding 100 according to the second embodiment will be described in detail. Like processes in the flow chart of FIG 2 described for the first embodiment will be denoted with like reference symbols, and the detailed description thereof will be omitted. When image data is input from a photographing apparatus 8 via an input unit 101 (Step S1), an image processing unit 102 extracts a red component (wavelength: 580 nm to 700 nm) from the image data (Step S2). The image data from which the red component has been extracted is subjected to inversed-binarization processing (pixel inversion) (Step S3).

Subsequently, a contact point detection unit 103 primarily detects an apparent tip (that is, the farthest downstream point) of the Vee convergence section 121 as a contact point $V_2'$ on the binarized image created in Step S3 (Step S10).

Subsequently, similarly to the case described in the first embodiment (see FIGS. 11A and 11B), on the binarized image created in Step S3, the contact point detection unit 103 linearly approximates the ends 4, 4 of the steel sheet 1 in a predetermined range, and detects a bisector $S_2$ of the Vee convergence angle formed by the approximation lines (Step S11). Then, the contact point detection unit 103 determines whether a split region 122 is present on the extended line of the bisector $S_2$ or not, that is, whether the tip of the Vee convergence section is split apart or not (Step S 12). This determination is made based on whether or not there is a blob long and thin in the transfer direction with, for example, a longitudinal to latitudinal ratio of 0.5 or less along the bisector $S_2$ of the Vee convergence angle.

When it is determined that the split region 122 is present in Step S12, the process moves to Step S 13. Then, after the tip (that is, the farthest downstream point) of the split region 122 is detected as the contact point $V_2$, the process moves to Step S5. On the other hand, when it is determined that the split region 122 is not present in Step S12, the process moves to Step S5 with the contact point $V_2'$, which has been primarily detected in Step S10, being regarded as the contact point $V_2$.

Subsequently, the temperature measurement region setting unit 104 sets a temperature measurement region 52 with a position on the downstream side from the contact point $V_2$, which has been detected in Step S10 or S13, by a distance L being as its starting point (Step S5). Then, a luminance level computation unit 105 calculates an average luminance level of the temperature measurement region 52 (Step S6). A temperature conversion unit 106 converts the average luminance level to temperature based on the preset temperature conversion data (Step S7).

Subsequently, a determination unit 107 determines whether a temperature of the temperature measurement region 52 obtained in Step S7 is more than the lower limit value (Step S8). As a result, if a temperature of the temperature measurement region 52 is more than the lower limit value, then it is determined to be normal. If the temperature is less than the lower limit value, then it is determined to be insufficient heat input In the case where a temperature of the temperature measurement region 52 is less than the lower limit value, an output unit 108 outputs a signal of abnormality such as an alarm (Step S9). After the output of a signal of abnormality, a feedback control over the operation may be performed to increase the amount of heat input and reduce the defective points, to thereby improve yields.

(Third embodiment)

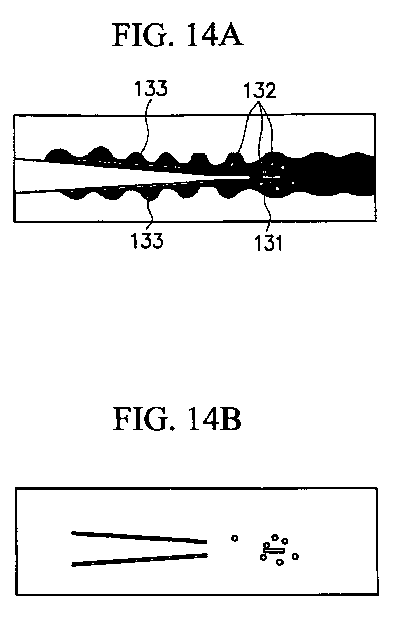

Next is a description of a third embodiment with reference to FIG. 14A to FIG. 17. When a natural light pattern in a region including a Vee convergence section on an exterior surface of a steel sheet 1 formed into a cylindrical shape is photographed, there are cases where arcs or sputtering is unexpectedly reflected in the photographed image, leading to the occurrence of high luminance level regions 131, 132, for example, with a high luminance level 1.5 or more times as luminous as the weld zone, as shown in FIG. 14A. In addition, due to the directional dependence of the radiance of steel sheets (see FIG. 19), there are cases where linear regions 133 with luminance level higher than that of the actual temperature occur in the photographed image so as to extend along ends 4 of a steel sheet 1. If the high luminance level regions 131 to 133 due to the arcs, the sputtering, the directional dependence of the radiance of steel sheets are included in a temperature measurement region 52, the average luminance level of the temperature measurement region 52 is high, preventing correct measurement of a temperature of the temperature measurement region 52.

In the third embodiment, the high luminance regions 131 to 133 as inhibitive element to temperature measurements are excluded, to thereby make it possible to correctly measure a temperature of the temperature measurement region 52.

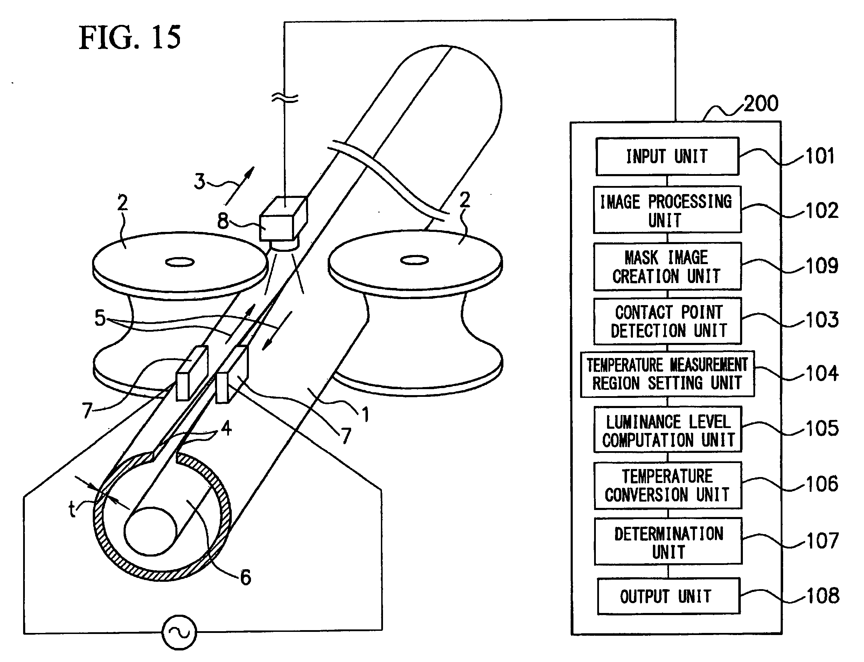

Hereunder is a detailed description of the third embodiment. As shown in FIG. 15, an operation monitoring apparatus for electric resistance welding 200 according to the third embodiment is basically the same as the operation monitoring apparatus for electric resistance welding 100 according to the first embodiment, but further includes a mask image creation unit 109 that creates a mask image for excluding high luminance level regions.

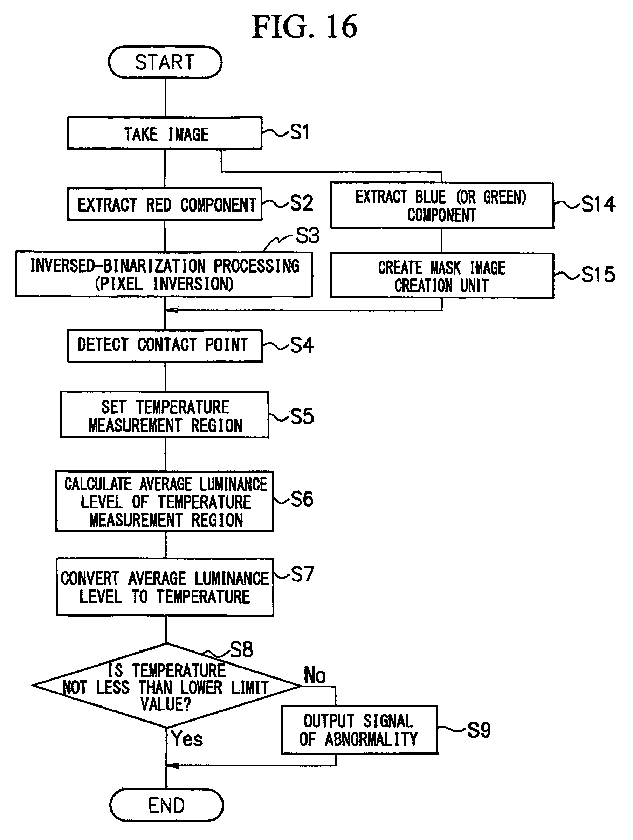

With reference to FIG 16, an operation monitoring method of the operation monitoring apparatus for electric resistance welding 200 according to the third embodiment will be described in detail. Like processes in the flow chart of FIG 2 described in the first embodiment are denoted with like reference symbols, and will not be repetitiously explained in detail. When image data is input from a photographing apparatus 8 via an input unit 101 (Step S1), an image processing unit 102 extracts a red component (wavelength: 580 nm to 700 nm) from the image data (Step S2), and subjects the image data, from which the red component has been extracted, to inversed-binarization processing (pixel inversion) (Step S3).

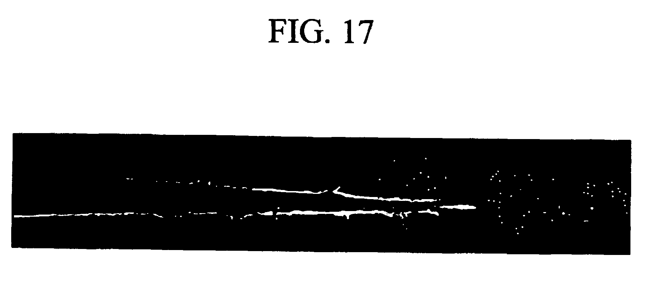

The mask image creation unit 109 extracts a blue component (wavelength: 400 nm to 500 nm) or a green component (wavelength: 500 nm to 580 nm) from the image data, which has been input via the input unit 101 (Step S 14), and binarizes the resultant image data into a mask image (Step S15). With the extraction of the blue component (wavelength: 400 nm to 500 nm) or the green component (wavelength: 500 nm to 580 nm), it is possible to extract only the high luminance level regions 131 to 133. FIG 14B and FIG 17 show schematic diagrams in which a mask image is pictorially represented.

Subsequently, a contact point detection unit 103 detects a contact point $V_2$ on the binarized image created in Step S3 (Step S4), and sets a temperature measurement region 52 with a position on the downstream side of the contact point $V_2$, which has been detected in Step S4, by a distance L being as its starting point (Step S5).

Subsequently, a luminance level computation unit 105 calculates an average luminance level of the temperature measurement region 52 which has been set in Step S5 (Step S6). At this time, if the temperature measurement region 52 set in Step S5 includes the high luminance regions 131 to 133 that occur in the mask image created in Step S15, then the luminance level computation unit 105 excludes the high luminance regions 131 to 133, and calculates an average luminance level of the rest of the regions.

Subsequently, a temperature conversion unit 106 converts the average luminance level of the temperature measurement region 52, which has been calculated in Step S6, to temperature based on the preset temperature conversion data (see FIG. 6) (Step S7).

Subsequently, a determination unit 107 determines whether a temperature of the temperature measurement region 52, which has been obtained in Step S7, is more than the lower limit value (Step S8). As a result, if a temperature of the temperature measurement region 52 is more than the lower limit value, then it is determined to be normal. If the temperature is less than the lower limit value, then it is determined to be insufficient heat input. In the case where a temperature of the temperature measurement region 52 is less than the lower limit value, an output unit 108 outputs a signal of abnormality such as an alarm (Step S9). After the output of a signal of abnormality, a feedback control over the operation may be performed to increase the amount of heat input and reduce the defective points, to thereby improve yields.

While the present invention has been described with a variety of embodiments, the present invention is not limited to these embodiments, and various modifications can be made within the scope of the invention. For example, the image processing described in the above embodiments is only an example. Any type of processing may be used so long as it is suitable for detecting a contact point $V_2$ or detecting a bisector $S_2$ of the Vee convergence angle.

As the operation monitoring apparatus for electric resistance welding of the present invention, specifically a computer system that contains a CPU, a ROM, a RAM, and the like may be used. The system is implemented by the CPU executing a program. As the operation monitoring apparatus for electric resistance welding of the present invention, a single apparatus may be used or plural pieces of equipment may be used.

Furthermore, the object of the present invention can be achieved also by supplying a storage medium, in which program code of software for implementing the function of the aforementioned operation monitoring for electric resistance welding is stored, to a system or an apparatus. In this case, the program code read from the storage medium itself implements the functions of the aforementioned embodiments, and hence, the program code itself and the storage medium in which the program code is stored are included in the present invention. As a storage medium for supplying the program code, for example a flexible disk, a hard disk, an optical disk, a magneto optical disk, a CD-ROM, a CD-R, a magnetic tape, a non-volatile memory card, a ROM, or the like may be used.

[Examples]

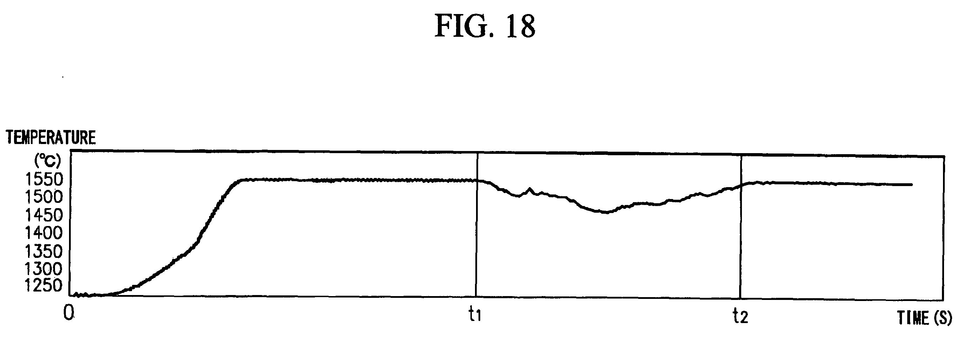

To verify the effects of the present invention, a temperature measurement region 52 was set, the region including the weld zone in which the melted steel when the upset force is applied with the squeeze rollers begins to be discharged from the interior of the sheet thickness to the surface. Then, the temperature of the region was measured. The result of Example is shown in FIG 18. The operational conditions were as follows. API (American Petroleum Institute) standard 5LX-65, size: outer diameter of 406.4 mmφ, sheet thickness: 9.5 mm, and welding speed: 19 mpm. The X-axis represents time, and the Y-axis represents measured temperature in the temperature measurement region 52. As for the amount of heat input, a proper amount derived from the past knowledge was used. However, from time $t_1$ to time $t_2$, the amount of heat input was kept low to produce a state of insufficient heat input. As shown in the figure, with the proper amount of heat input, the measured temperature in the temperature measurement region 52 stayed around the melting point of steel after passage of a given period of time from the start of heat input. When the heat input was insufficient (time $t_1$ to time $t_2$), the measured temperature in the temperature measurement region 52 was low. From this, it has been found out that the measured temperature in the temperature measurement region 52 can be utilized as evidence of melting for avoiding the weld conditions leading to possible unmelting.

[Comparative Example]

In Comparative Example, the temperature measurement region was a site of the solidification area $V_4$ which was located on the downstream side of the temperature measurement region 52 of the present invention and at which, after completion of the process where the fusion zone in the interior of the sheet thickness t after welding was discharged to the surface, the surface began to solidify. The temperature of the region was measured, and the result is shown in FIG. 20. The temperature measurement region, which corresponds to the region according to Patent Document 2, was set to the position approximately 25 mm spaced from the weld zone $V_3$ to the downstream side. The operational conditions were the same as those of Example. Namely, API (American Petroleum Institute) standard 5LX-65, size: outer diameter of 406.4 mm$\varphi$, sheet thickness: 9.5 mm, and welding speed: 19 mpm. The X-axis represents time, and the Y-axis represents measured temperature in the temperature measurement region. As for the amount of heat input, a proper amount derived from the past knowledge was used. However, the result shows that the temperature was kept unstably around or below the melting point of the steel. In this measurement region, the surface has greater asperity than that of the weld zone $V_3$ of the temperature measurement region 52, and besides, oxide films with different emissivity are locally produced on its surface layer. These presumably have led to unstable values of the measured temperature. Therefore, from the result of measuring the temperature of the solidification area $V_4$ on the downstream side of the weld zone $V_3$, shifting the temperature measurement region to the farther downstream side makes the variance of the values of the measured temperature great. This makes the distinction between the site with an actual abnormality in welding and the site normally welded. Thus, from the results of Example and Comparative Example, the stable temperature measurement and the evidence of melting are available if temperature measurement is limited to the region including the weld zone $V_3$.

[Industrial Applicability]

According to the present invention, it is possible to set the temperature measurement region so as to include the weld zone where the melted steel begins to be discharged from the interior of the sheet thickness to the surface. Consequently, the temperature of the weld zone can be measured in a real time, stable, and precise manner, to thereby provide evidence of melting for avoiding welding conditions leading to possible unmelting. This makes it possible to offer operational control such as to set the weld conditions to favorable ones. Therefore, it is possible to suppress the occurrence of deficient area due to unmelting.

[Reference Signs List]

1: steel sheet
2: squeeze roller
3: direction
4: both of circumferential ends
5: high frequency electric current
6: impeder
7: contact tip
8: photographing apparatus
9: standard blackbody furnace
10: standard radiation thermometer
11: luminance analyzer
41: luminous region
52: temperature measurement region
91: blob
100: operation monitoring apparatus for electric resistance welding
101: input unit
102: image processing unit
103: contact point detection unit
104: temperature measurement region setting unit
105: luminance level computation unit
106: temperature conversion unit
107: determination unit
108: output unit
109: mask image creation unit

121: apparent Vee convergence section
122: split region
131: high luminance level region
132: high luminance level region
133: high luminance level region (linear region)
200: operation monitoring apparatus for electric resistance welding
L: distance between contact point $V_2$ and temperature measurement region 52
$L_1$: distance between Vee convergence point $V_1$ and contact point $V_2$
$L_2$: distance between contact point $V_2$ and weld zone $V_3$
E1: thick line
E2: thin line
$S_1$: straight line
$S_2$: bisector
t: sheet thickness
$V_1$: Vee convergence point
$V_2$: contact point
$V_2$': contact point
$V_3$: weld zone in which fusion zone in interior of sheet thickness t begins to be discharged to surface of steel sheet
$V_4$: solidification area in which solidification of surface of sheet thickness begins

## Claims

1. A monitoring apparatus for an electric resistance welding operation that forms a strip-like steel sheet (1) continuously into a cylindrical shape with a group of rollers (2) while the steel sheet is being transferred, and heats and melts both of circumferential ends of the formed steel sheet converging in a V shape, butts against each other, the monitoring apparatus comprising:

   an image obtaining unit (101) that takes a photograph from at least either one of an external surface side and an internal surface side of the steel sheet when the steel sheet is formed into the cylindrical shape, to thereby obtain an image of a region including a Vee convergence section, which is an area where both of the circumferential ends converge in the V shape;
   either one of a contact point detection unit (103) that, based on the image obtained by the image obtaining unit (101), detects a contact point ($V_2$) between both of the circumferential ends of the formed steel sheet converging in the V shape, and a Vee convergence point detection unit that, based on the image obtained by the image obtaining unit, detects a Vee convergence point, which is a geometrical convergence point between both of the circumferential ends of the formed steel sheet converging in the V shape; and **characterized by**
   a temperature measurement region setting unit (104) that, based on either one of a position of the contact point detected by the contact point detection unit and a position of the Vee convergence point detected by the Vee convergence point detection unit, sets a temperature measurement region (52) including a weld zone in which a fusion zone in an interior of a sheet thickness of the steel sheet begins to be discharged to a surface of the steel sheet;
   a luminance level computation unit (105) that calculates a luminance level of the temperature measurement region having been set by the temperature measurement region setting unit (104);
   a temperature conversion unit (106) that, based on a preset temperature conversion data, converts the luminance level of the temperature measurement region calculated by the luminance level computation unit to a temperature of the temperature measurement region; and
   a determination unit (107) that determines whether a temperature of the temperature measurement region is more than or equal to a predetermined lower limit value.

2. The monitoring apparatus for an electric resistance welding operation according to Claim 1, wherein in a case of detecting the contact point by the contact point detection unit (103), the temperature measurement region setting unit (104) sets the temperature measurement region (52) so as to include the weld zone on an assumption that the weld zone is present at a position spaced from the contact point to a downstream side by a given distance.

3. The monitoring apparatus for an electric resistance welding operation according to Claim 2, wherein in a case of detecting the contact point by the contact point detection unit (103), the contact point detection unit,

based on the image obtained by the image obtaining unit (101), primarily detects the contact point between both of the circumferential ends of the formed steel sheet converging in the V shape;

based on the image obtained by the image obtaining unit, linearly approximates both of the circumferential ends of the formed steel sheet converging in the V shape, and determines whether or not a split region (122), which is a split-apart area of a tip of the Vee convergence section on a downstream side, is present on an extended line of a bisector of a Vee convergence angle formed by the approximation lines meeting each other; and

when it is determined that the split region (122) is not present, detects the primarily detected contact point as the contact point, while when it is determined that the split region is present, detects a farthest downstream point of the split region as the contact point.

4. The monitoring apparatus for an electric resistance welding operation according to any one of Claims 1 to 3, the monitoring apparatus further comprising,

a mask image creation unit (109) that creates a mask image for excluding a high luminance level region with the luminance level more than or equal to a predetermined value from the image obtained by the image obtaining unit.

5. A monitoring method of an electric resistance welding operation that forms a strip-like steel sheet (1), continuously into a cylindrical shape with a group of rollers (2) while the steel sheet is being transferred, and heats and melts both of a circumferential ends of the formed steel sheet converging in a V shape, and butts against each other, the monitoring method comprising:

an image obtaining step that takes a photograph from at least either one of an external surface side and an internal surface side of the steel sheet when the steel sheet is formed into the cylindrical shape, to thereby obtain an image of a region including a Vee convergence section, which is an area where both of the circumferential ends converge in the V shape;

either one of a contact point detection step that, based on the image obtained by the image obtaining step, detects a contact point $V_2$ between both of the circumferential ends of the formed steel sheet converging in the V shape, and a Vee convergence point detection step that, based on the image obtained by the image obtaining step, detects a Vee convergence point, which is a geometrical convergence point between both of the circumferential ends of the formed steel sheet converging in the V shape; and **characterized by**

a temperature measurement region setting step that, based on either one of a position of the contact point detected by the contact point detection step and a position of the Vee convergence point detected by the Vee convergence point detection step, sets a temperature measurement region including a weld zone in which a fusion zone in an interior of a sheet thickness of the steel sheet begins to be discharged to a surface of the steel sheet;

a luminance level computation step that calculates a luminance level of the temperature measurement region having been set by the temperature measurement region setting step;

a temperature conversion step that, based on a preset temperature conversion data, converts the luminance level of the temperature measurement region calculated by the luminance level computation step to a temperature of the temperature measurement region; and

a determination step that determines whether a temperature of the temperature measurement region is more than or equal to a predetermined lower limit value.

6. A program for monitoring an electric resistance welding operation for use in a welding operation that forms a strip-like steel sheet (1) continuously into a cylindrical shape with a group of rollers (2) while the steel sheet is being transferred, and heats and melts both of a circumferential ends of the formed steel sheet converging in a V shape, and butts against each other, the program comprising:

an image obtaining section that takes a photograph from at least either one of an external surface side and an internal surface side of the steel sheet when the steel sheet is formed into the cylindrical shape, to thereby obtain an image of a region including a Vee convergence section, which is an area where both of the circumferential ends converge in the V shape;

either one of a contact point detection section that, based on the image obtained by the image obtaining section, detects a contact point ($V_2$) between both of the circumferential ends of the formed steel sheet converging in the V shape, and a Vee convergence point detection section that, based on the image obtaining section, detects a Vee convergence point ($V_1$) which is a geometrical convergence point between both of the circumferential ends of the formed steel sheet converging in the V shape;

a temperature measurement region setting section that, based on either one of a position of the contact point detected by the contact point detection section and a position of the Vee convergence point detected by the Vee convergence point detection section, sets a temperature measurement region (52) including a weld zone in which a fusion zone in an interior of a sheet thickness of the steel sheet begins to be discharged to a surface of the steel sheet;

a luminance level computation section that calculates a luminance level of the temperature measurement region (52) having been set by the temperature measurement region setting section;

a temperature conversion section that, based on a preset temperature conversion data, converts the luminance level of the temperature measurement region (52) calculated by the luminance level computation section to a temperature of the temperature measurement region; and

a determination section that determines whether a temperature of the temperature measurement region is more than or equal to a predetermined lower limit value.

**7.** A storage medium in which the program according to Claim 6 is stored.

**Patentansprüche**

**1.** Überwachungsvorrichtung für einen elektrischen Widerstandsschweißvorgang, der ein streifenförmiges Stahlblech (1) kontinuierlich mit einer Gruppe von Walzen (2) zu einer zylindrischen Form formt, während das Stahlblech weitergeleitet wird, und beide Umfangsenden des geformten Stahlblechs, die in einer V-Form konvergieren, erwärmt und schmelzt und sie gegeneinander stößt, wobei die Überwachungsvorrichtung aufweist:

eine Bildbeschaffungseinheit (101), die ein Foto von einer Außenoberflächenseite und/ oder einer Innenoberflächenseite des Stahlblechs aufnimmt, wenn das Stahlblech in die zylindrische Form geformt wird, um dadurch ein Bild eines Bereichs zu beschaffen, der einen V-Konvergenzabschnitt umfasst, der ein Bereich ist, wo beide Umfangsenden in der V-Form konvergieren;

eine Kontaktpunktermittlungseinheit (103), die beruhend auf dem durch die Bildbeschaffungseinheit (101) beschafften Bild einen Kontaktpunkt ($V_2$) zwischen beiden Umfangsenden des geformten Stahlblechs ermittelt, die in der V-Form konvergieren, oder eine V-Konvergenzpunktermittlungseinheit, die beruhend auf dem durch die Bildbeschaffungseinheit beschafften Bild einen V-Konvergenzpunkt ermittelt, der ein geometrischer Konvergenzpunkt zwischen beiden Umfangsenden des geformten Stahlblechs ist, die in der V-Form konvergieren; und **gekennzeichnet durch**

eine Temperaturmessbereichseinstelleinheit (104), die beruhend auf einer Position des durch die Kontaktpunktermittlungseinheit ermittelten Kontaktpunkts oder einer **durch** die V-Konvergenzpunktermittlungseinheit ermittelten Position des V-Konvergenzpunkts einen Temperaturmessbereich (52) einstellt, der eine Schweißzone umfasst, in der eine Verschmelzungszone in einem Inneren einer Blechdicke des Stahlblechs beginnt, sich zu einer Oberfläche des Stahlblechs zu entladen;

eine Leuchtdichtepegelberechnungseinheit (105), die einen Leuchtdichtepegel des Temperaturmessbereichs berechnet, der **durch** die Temperaturmessbereichseinstelleinheit (104) eingestellt worden ist;

eine Temperaturumwandlungseinheit (106), die beruhend auf voreingestellten Temperaturumwandlungsdaten den Leuchtdichtepegel des **durch** die Leuchtdichtepegelberechnungseinheit berechneten Temperaturmessbereichs in eine Temperatur des Temperaturmessbereichs umwandelt; und

eine Feststellungseinheit (107), die feststellt, ob eine Temperatur des Temperaturmessbereichs höher oder gleich einem vorgegebenen unteren Grenzwert ist.

**2.** Überwachungsvorrichtung für einen elektrischen Widerstandsschweißvorgang nach Anspruch 1, wobei in einem Fall, dass der Kontaktpunkt durch die Kontaktpunktermittlungseinheit (103) ermittelt wird, die Temperaturmessbereichseinstelleinheit (104) den Temperaturmessbereich (52) so einstellt, dass er die Schweißzone enthält, unter der Annahme, dass die Schweißzone an einer Position vorhanden ist, die auf einer vom Kontaktpunkt nachgelagerten Seite in einem vorgegebenen Abstand angeordnet ist.

**3.** Überwachungsvorrichtung für einen elektrischen Widerstandsschweißvorgang nach Anspruch 2, wobei in einem Fall, dass der Kontaktpunkt durch die Kontaktpunktermittlungseinheit (103) ermittelt wird, die Kontaktpunktermittlungseinheit

beruhend auf dem durch die Bildbeschaffungseinheit (101) beschafften Bild primär den Kontaktpunkt zwischen beiden Umfangsenden des geformten Stahlblechs ermittelt, die in der V-Form konvergieren;

beruhend auf dem durch die Bildbeschaffungseinheit beschafften Bild beide Umfangsenden des geformten Stahlblechs linear approximiert, die in der V-Form konvergieren, und feststellt, ob ein Spaltbereich (122), der ein abgespaltener Bereich einer Spitze des V-Konvergenzabschnitts auf einer nachgelagerten Seite ist, auf einer verlängerten Linie einer Halbierenden eines V-Konvergenzwinkels vorhanden ist, der durch die sich treffenden Approximationslinien gebildet wird; und

wenn festgestellt wird, dass der Spaltbereich (122) nicht vorhanden ist, den primär ermittelten Kontaktpunkt als den Kontaktpunkt ermittelt, während wenn festgestellt wird, dass der Spaltbereich vorhanden ist, einen am weitesten nachgelagerten Punkt des Spaltbereichs als den Kontaktpunkt ermittelt.

4. Überwachungsvorrichtung für einen elektrischen Widerstandsschweißvorgang nach einem der Ansprüche 1 bis 3, wobei die Überwachungsvorrichtung ferner aufweist eine Maskenbilderzeugungseinheit (109), die ein Maskenbild zum Ausschließen eines Bereichs mit hohem Leuchtdichtepegel, in dem der Leuchtdichtepegel größer oder gleich einem vorgegebenen Wert ist, aus dem durch die Bildbeschaffungseinheit beschafften Bild aufweist.

5. Überwachungsverfahren für einen elektrischen Widerstandsschweißvorgang, der ein streifenförmiges Stahlblech (1) kontinuierlich mit einer Gruppe von Walzen (2) zu einer zylindrischen Form formt, während das Stahlblech weitergeleitet wird, und beide Umfangsenden des geformten Stahlblechs, die in einer V-Form konvergieren, erwärmt und schmelzt und sie gegeneinander stößt, wobei das Überwachungsverfahren aufweist:

einen Bildbeschaffungsschritt, der ein Foto von einer Außenoberflächenseite und/oder einer Innenoberflächenseite des Stahlblechs aufnimmt, wenn das Stahlblech in die zylindrische Form geformt wird, um dadurch ein Bild eines Bereichs zu beschaffen, der einen V-Konvergenzabschnitt umfasst, der ein Bereich ist, wo beide Umfangsenden in der V-Form konvergieren;
einen Kontaktpunktermittlungsschritt, der beruhend auf dem durch den Bildbeschaffungsschritt beschafften Bild einen Kontaktpunkt ($V_2$) zwischen beiden Umfangsenden des geformten Stahlblechs ermittelt, die in der V-Form konvergieren, oder einen V-Konvergenzpunktermittlungsschritt, der beruhend auf dem durch den Bildbeschaffungsschritt beschafften Bild einen V-Konvergenzpunkt ermittelt, der ein geometrischer Konvergenzpunkt zwischen beiden Umfangsenden des geformten Stahlblechs ist, die in der V-Form konvergieren; und **gekennzeichnet durch**
einen Temperaturmessbereichseinstellschritt, der beruhend auf einer Position des **durch** den Kontaktpunktermittlungsschritt ermittelten Kontaktpunkts oder einer Position des durch den V-Konvergenzpunktermittlungsschritt ermittelten V-Konvergenzpunkts einen Temperaturmessbereich einstellt, der eine Schweißzone umfasst, in der eine Verschmelzungszone in einem Inneren einer Blechdicke des Stahlblechs beginnt, sich zu einer Oberfläche des Stahlblechs zu entladen;
einen Leuchtdichtepegelberechnungsschritt, der einen Leuchtdichtepegel des Temperaturmessbereichs berechnet, der **durch** den Temperaturmessbereichseinstellschritt eingestellt worden ist;
einen Temperaturumwandlungsschritt, der beruhend auf voreingestellten Temperaturumwandlungsdaten den Leuchtdichtepegel des **durch** den Leuchtdichtepegelberechnungsschritt berechneten Temperaturmessbereichs in eine Temperatur des Temperaturmessbereichs umwandelt; und
einen Feststellungsschritt, der feststellt, ob eine Temperatur des Temperaturmessbereichs höher oder gleich einem vorgegebenen unteren Grenzwert ist.

6. Programm zur Überwachung eines elektrischen Widerstandsschweißvorgangs zur Verwendung in einem Schweißvorgang, der ein streifenförmiges Stahlblech (1) kontinuierlich mit einer Gruppe von Walzen (2) zu einer zylindrischen Form formt, während das Stahlblech weitergeleitet wird, und beide Umfangsenden des geformten Stahlblechs, die in einer V-Form konvergieren, erwärmt und schmelzt und sie gegeneinander stößt, wobei das Programm aufweist:

einen Bildbeschaffungsabschnitt, der ein Foto von einer Außenoberflächenseite und/ oder einer Innenoberflächenseite des Stahlblechs aufnimmt, wenn das Stahlblech in die zylindrische Form geformt wird, um dadurch ein Bild eines Bereichs zu beschaffen, der einen V-Konvergenzabschnitt umfasst, der ein Bereich ist, wo beide Umfangsenden in der V-Form konvergieren;
einen Kontaktpunktermittlungsabschnitt, der beruhend auf dem durch den Bildbeschaffungsabschnitt beschafften Bild einen Kontaktpunkt ($V_2$) zwischen beiden Umfangsenden des geformten Stahlblechs ermittelt, die in der V-Form konvergieren, oder einen V-Konvergenzpunktermittlungsabschnitt, der beruhend auf dem durch den Bildbeschaffungsabschnitt beschafften Bild einen V-Konvergenzpunkt ($V_1$) ermittelt, der ein geometrischer Konvergenzpunkt zwischen beiden Umfangsenden des geformten Stahlblechs ist, die in der V-Form konvergieren;
einen Temperaturmessbereichseinstellabschnitt, der beruhend auf einer Position des durch den Kontaktpunktermittlungsabschnitt ermittelten Kontaktpunkts oder einer Position des durch den V-Konvergenzpunktermittlungsabschnitt ermittelten V-Konvergenzpunkts einen Temperaturmessbereich (52) einstellt, der eine Schweißzone umfasst, in der eine Verschmelzungszone in einem Inneren einer Blechdicke des Stahlblechs beginnt, sich zu einer Oberfläche des Stahlblechs zu entladen;

einen Leuchtdichtepegelberechnungsabschnitt, der einen Leuchtdichtepegel des Temperaturmessbereichs (52) berechnet, der durch den Temperaturmessbereichseinstellabschnitt eingestellt worden ist;

einen Temperaturumwandlungsabschnitt, der beruhend auf voreingestellten Temperaturumwandlungsdaten den Leuchtdichtepegel des durch den Leuchtdichtepegelberechnungsabschnitt berechneten Temperaturmessbereichs (52) in eine Temperatur des Temperaturmessbereichs umwandelt; und

einen Feststellungsabschnitt, der feststellt, ob eine Temperatur des Temperaturmessbereichs höher oder gleich einem vorgegebenen unteren Grenzwert ist.

7. Speichermedium, in dem das Programm nach Anspruch 6 gespeichert ist.


## Revendications

1. Dispositif de surveillance d'un soudage par résistance électrique pour le formage cylindrique continu d'une feuille d'acier en bande (1) au moyen d'un groupe de rouleaux (2) pendant le transport de la feuille d'acier, et le chauffage et la fusion des deux extrémités circonférentielles de la feuille d'acier convergentes en forme de V et butant l'une contre l'autre, ledit dispositif de surveillance comprenant :

une unité d'acquisition d'image (101) prenant une photographie d'une face de surface extérieure et/ou d'une face de surface intérieure de la feuille d'acier quand la feuille d'acier est formée cylindriquement, pour obtenir une image d'une zone comprenant une section de convergence Vee, qui est une surface où les deux extrémités circonférentielles convergent en forme de V ;

une unité de détection de point de contact (103) qui sur la base de l'image obtenue par l'unité d'acquisition d'image (101) détecte un point de contact ($V_2$) entre les deux extrémités circonférentielles de la feuille d'acier formée convergeant en forme de V, ou

une unité de détection de point de convergence Vee qui sur la base de l'image obtenue par l'unité d'acquisition d'image détecte un point de convergence Vee, qui est un point de convergence géométrique entre les deux extrémités circonférentielles de la feuille d'acier formée convergeant en forme de V ;

**caractérisé par**

une unité de détermination de la zone de mesure de température (104) qui sur la base d'une position du point de contact détecté par l'unité de détection de point de contact ou

d'une position du point de convergence Vee détecté par l'unité de détection de point de convergence Vee, détermine une zone de mesure de température (52) incluant une zone de soudure où une zone de fusion comprise dans une épaisseur de la feuille d'acier commence à être évacuée vers la surface de la feuille d'acier ;

une unité de calcul de niveau de luminosité (105) qui calcule un niveau de luminosité de la zone de mesure de température déterminée par l'unité de détermination de la zone de mesure de température (104) ;

une unité de conversion de température (106) qui sur la base de données de conversion de température prédéfinie convertit le niveau de luminosité de la zone de mesure de température calculé par l'unité de calcul de niveau de luminosité en une température de la zone de mesure de température ; et

une unité de détermination (107) qui détermine si une température de la zone de mesure de température est supérieure ou égale à une valeur limite inférieure prédéterminée.

2. Dispositif de surveillance d'un soudage par résistance électrique selon la revendication 1, où
en cas de détection du point de contact par l'unité de détection de point de contact (103), l'unité de détermination de la zone de mesure de température (104) détermine la zone de mesure de température (52) de manière à inclure la zone de soudure, dans l'hypothèse où la zone de soudure est présentée à un emplacement espacé d'une distance donnée en aval du point de contact.

3. Dispositif de surveillance d'un soudage par résistance électrique selon la revendication 2, où
en cas de détection du point de contact par l'unité de détection de point de contact (103), l'unité de détection de point de contact,
sur la base de l'image obtenue par l'unité d'acquisition d'image (101), détecte en premier lieu le point de contact entre les deux extrémités circonférentielles de la feuille d'acier formée convergeant en forme de V ;
sur la base de l'image obtenue par l'unité d'acquisition d'image, effectue un rapprochement linéaire des deux extrémités circonférentielles de la feuille d'acier formée convergeant en forme de V, et détermine si une zone fendue (122), qui est une zone fendue espacée en aval d'une extrémité de la section de convergence Vee, est présentée sur une ligne prolongée d'une bissectrice d'un angle de convergence Vee formé par les lignes de rapprochement se rencontrant ; et,

s'il est déterminé que la zone fendue (122) n'est pas présentée, détecte comme point de contact le point de contact détecté en premier lieu, alors que, s'il est déterminé que la zone fendue est présentée, détecte comme point de contact un point de la zone fendue le plus distant en aval.

4. Dispositif de surveillance d'un soudage par résistance électrique selon l'une des revendications 1 à 3, ledit dispositif de surveillance comprenant en outre :

    une unité de création d'image de masque (109) qui crée une image de masque pour exclure une zone à niveau de luminosité élevé, dont le niveau de luminosité est supérieur ou égal à une valeur prédéterminée, de l'image obtenue par l'unité d'acquisition d'image.

5. Procédé de surveillance d'un soudage par résistance électrique pour le formage cylindrique continu d'une feuille d'acier en bande (1) au moyen d'un groupe de rouleaux (2) pendant le transport de la feuille d'acier, et le chauffage et la fusion des deux extrémités circonférentielles de la feuille d'acier convergentes en forme de V et butant l'une contre l'autre, ledit procédé de surveillance comprenant :

    une étape d'acquisition d'image où est prise une photographie d'une face de surface extérieure et/ou d'une face de surface intérieure de la feuille d'acier quand la feuille d'acier est formée cylindriquement, pour obtenir une image d'une zone comprenant une section de convergence Vee, qui est une surface où les deux extrémités circonférentielles convergent en forme de V ;

    une étape de détection d'un point de contact qui sur la base de l'image obtenue lors de l'étape d'acquisition d'image détecte un point de contact ($V_2$) entre les deux extrémités circonférentielles de la feuille d'acier formée convergeant en forme de V, ou une étape de détection d'un point de convergence Vee qui sur la base de l'image obtenue lors de l'étape d'acquisition d'image détecte un point de convergence Vee, qui est un point de convergence géométrique entre les deux extrémités circonférentielles de la feuille d'acier formée convergeant en forme de V ;

    **caractérisé par**

    une étape de détermination de zone de mesure de température qui sur la base d'une position du point de contact détecté lors de l'étape de détection de point de contact ou d'une position du point de convergence Vee détecté lors de l'étape de détection de point de convergence Vee, détermine une zone de mesure de température incluant une zone de soudure où une zone de fusion comprise dans une épaisseur de la feuille d'acier commence à être évacuée vers la surface de la feuille d'acier ;

    une étape de calcul de niveau de luminosité qui calcule un niveau de luminosité de la zone de mesure de température déterminée lors de l'étape de détermination de la zone de mesure de température ;

    une étape de conversion de température qui sur la base de données de conversion de température prédéfinie convertit le niveau de luminosité de la zone de mesure de température calculé lors de l'étape de calcul de niveau de luminosité en une température de la zone de mesure de température ; et

    une étape de détermination qui détermine si une température de la zone de mesure de température est supérieure ou égale à une valeur limite inférieure prédéterminée.

6. Programme de surveillance d'un soudage par résistance électrique destiné à être utilisé pour un soudage de formage cylindrique continu d'une feuille d'acier en bande (1) au moyen d'un groupe de rouleaux (2) pendant le transport de la feuille d'acier, et le chauffage et la fusion des deux extrémités circonférentielles de la feuille d'acier convergentes en forme de V et butant l'une contre l'autre, ledit programme comprenant :

    une section d'acquisition d'image prenant une photographie d'une face de surface extérieure et/ou d'une face de surface intérieure de la feuille d'acier quand la feuille d'acier est formée cylindriquement, pour obtenir une image d'une zone comprenant une section de convergence Vee, qui est une surface où les deux extrémités circonférentielles convergent en forme de V ;

    une section de détection d'un point de contact qui sur la base de l'image obtenue par la section d'acquisition d'image détecte un point de contact ($V_2$) entre les deux extrémités circonférentielles de la feuille d'acier formée convergeant en forme de V, ou une section de détection de point de convergence Vee qui sur la base de l'image obtenue par la section d'acquisition d'image détecte un point de convergence Vee ($V_1$), qui est un point de convergence géométrique entre les deux extrémités circonférentielles de la feuille d'acier formée convergeant en forme de V ;

    une section de détermination de zone de mesure de température qui sur la base d'une position du point de contact détecté par la section de détection de point de contact ou d'une position du point de convergence Vee détecté par la section de détection de point de convergence Vee, détermine une zone de mesure de température (52) incluant une zone de soudure où une zone de fusion comprise dans une épaisseur de la feuille d'acier commence à être évacuée vers la surface de la feuille d'acier ;

une section de calcul de niveau de luminosité qui calcule un niveau de luminosité de la zone de mesure de température (52) déterminée par la section de détermination de la zone de mesure de température ;

une section de conversion de température qui sur la base de données de conversion de température prédéfinie convertit le niveau de luminosité de la zone de mesure de température (52) calculé par la section de calcul de niveau de luminosité en une température de la zone de mesure de température ; et

une section de détermination qui détermine si une température de la zone de mesure de température est supérieure ou égale à une valeur limite inférieure prédéterminée.

7. Support de mémoire où le programme selon la revendication 6 est mémorisé.

## FIG. 1

EP 2 777 859 B1

| | |
|---|---|
| INPUT UNIT | 101 |
| IMAGE PROCESSING UNIT | 102 |
| CONTACT POINT DETECTION UNIT | 103 |
| TEMPERATURE MEASUREMENT REGION SETTING UNIT | 104 |
| LUMINANCE LEVEL COMPUTATION UNIT | 105 |
| TEMPERATURE CONVERSION UNIT | 106 |
| DETERMINATION UNIT | 107 |
| OUTPUT UNIT | 108 |

100

# FIG. 2

```
        ┌─────────────┐
        │    START    │
        └─────────────┘
               │
        ┌─────────────────┐
        │   TAKE IMAGE    │──S1
        └─────────────────┘
               │
        ┌─────────────────────┐
        │ EXTRACT RED COMPONENT │──S2
        └─────────────────────┘
               │
     ┌──────────────────────────────┐
     │ INVERSED-BINARIZATION PROCESSING │──S3
     │       (PIXEL INVERSION)       │
     └──────────────────────────────┘
               │
        ┌──────────────────────┐
        │ DETECT CONTACT POINT │──S4
        └──────────────────────┘
               │
        ┌──────────────────┐
        │ SET TEMPERATURE  │──S5
        │MEASUREMENT REGION│
        └──────────────────┘
               │
     ┌────────────────────────────┐
     │    CALCULATE AVERAGE        │
     │ LUMINANCE LEVEL OF TEMPERATURE│──S6
     │     MEASUREMENT REGION      │
     └────────────────────────────┘
               │
        ┌──────────────────────┐
        │ CONVERT AVERAGE LUMINANCE │──S7
        │  LEVEL TO TEMPERATURE │
        └──────────────────────┘
               │
            ╱────────╲  S8
          ╱  IS TEMPERATURE ╲   No
         ╱ NOT LESS THAN LOWER LIMIT ╲──────┐
          ╲    VALUE?    ╱            │
            ╲────────╱           ┌──────────────┐
               │ Yes            │ OUTPUT SIGNAL │──S9
               │                │ OF ABNORMALITY │
               │                └──────────────┘
               │◄───────────────────────┘
        ┌─────────────┐
        │     END     │
        └─────────────┘
```

# FIG. 3

START

$\sim$S31

LABELING

$\sim$S32

EXTRACT BLOB ? —No—

Yes

ABNORMAL FLAG $\sim$S34

$\sim$S35

IS ABNORMAL FLAG ON FOR PREDETERMINED NUMBER OF FRAMES? —No

Yes

$\sim$S33

EXTRACT CONTACT POINT

OUTPUT ALARM FOR ABNORMALITY $\sim$S36

END

END

FIG. 4

# FIG. 5A

# FIG. 5B

FIG. 5C

## FIG. 6

## FIG. 7

## FIG. 8

## FIG. 9A

## FIG. 9B

## FIG. 9C

## FIG. 9D

REGION LINEARLY APPROXIMATED

# FIG. 10

# FIG. 11A

# FIG. 11B

## FIG. 12A

121    122

## FIG. 12B

121    122

V₂'

## FIG. 12C

121    122

V₂

## FIG. 13

```
           ( START )
               │
    ┌──────────────────────┐
    │    TAKE IMAGE        │──S1
    └──────────────────────┘
               │
    ┌──────────────────────┐
    │  EXTRACT RED COMPONENT│──S2
    └──────────────────────┘
               │
 ┌───────────────────────────┐
 │ INVERSED-BINARIZATION     │
 │ PROCESSING                │──S3
 │ (PIXEL INVERSION)         │
 └───────────────────────────┘
               │
    ┌──────────────────────┐
    │  PRIMARILY DETECT     │──S10
    │  CONTACT POINT        │
    └──────────────────────┘
               │
    ┌──────────────────────┐
    │ DETECT BISECTOR $S_2$ │──S11
    │ OF VEE CONVERGENCE    │
    │ ANGLE                 │
    └──────────────────────┘
               │
            ◇ S12
          SPLIT?  ──No──┐
            │Yes        │
    ┌──────────────────────┐  │
    │ DETECT CONTACT POINT  │──S13  │
    └──────────────────────┘  │
               │←─────────────┘
    ┌──────────────────────┐
    │  SET TEMPERATURE      │──S5
    │  MEASUREMENT REGION   │
    └──────────────────────┘
               │
    ┌──────────────────────┐
    │  CALCULATE AVERAGE    │
    │ LUMINANCE LEVEL OF    │──S6
    │ TEMPERATURE           │
    │ MEASUREMENT REGION    │
    └──────────────────────┘
               │
    ┌──────────────────────┐
    │  CONVERT AVERAGE      │──S7
    │  LUMINANCE LEVEL      │
    │  TO TEMPERATURE       │
    └──────────────────────┘
               │
            ◇ S8
    IS TEMPERATURE NOT LESS
    THAN LOWER LIMIT VALUE? ──No──┐
            │Yes                  │
            │          ┌──────────────────────┐
            │          │  OUTPUT SIGNAL        │──S9
            │          │  OF ABNORMALITY       │
            │          └──────────────────────┘
            │←──────────────────┘
          ( END )
```

# FIG. 14A

# FIG. 14B

# FIG. 15

| | |
|---|---|
| INPUT UNIT | 101 |
| IMAGE PROCESSING UNIT | 102 |
| MASK IMAGE CREATION UNIT | 109 |
| CONTACT POINT DETECTION UNIT | 103 |
| TEMPERATURE MEASUREMENT REGION SETTING UNIT | 104 |
| LUMINANCE LEVEL COMPUTATION UNIT | 105 |
| TEMPERATURE CONVERSION UNIT | 106 |
| DETERMINATION UNIT | 107 |
| OUTPUT UNIT | 108 |

# FIG. 16

```
                    ( START )
                        |
              +-------------------+
              |   TAKE IMAGE      |~S1
              +-------------------+
                        |
           +------------+------------------------+
           |                                     |
  +-------------------+              +------------------------+
  | EXTRACT RED       |~S2           | EXTRACT BLUE (OR GREEN)|~S14
  | COMPONENT         |              | COMPONENT              |
  +-------------------+              +------------------------+
           |   ~S3                              |
  +-----------------------------+    +------------------------+
  | INVERSED-BINARIZATION       |    | CREATE MASK IMAGE      |~S15
  | PROCESSING (PIXEL INVERSION)|    | CREATION UNIT          |
  +-----------------------------+    +------------------------+
           |                                     |
           +<------------------------------------+
           |
  +-------------------+
  | DETECT CONTACT    |~S4
  | POINT             |
  +-------------------+
           |
  +-------------------+
  | SET TEMPERATURE   |~S5
  | MEASUREMENT REGION|
  +-------------------+
           |
  +-----------------------+
  | CALCULATE AVERAGE     |~S6
  | LUMINANCE LEVEL OF    |
  | TEMPERATURE           |
  | MEASUREMENT REGION    |
  +-----------------------+
           |
  +-----------------------+
  | CONVERT AVERAGE       |~S7
  | LUMINANCE LEVEL TO    |
  | TEMPERATURE           |
  +-----------------------+
           |
         ~S8
      / IS TEMPERATURE  \   No
     <  NOT LESS THAN    >------+
      \ LOWER LIMIT VALUE?/     |
           | Yes        +----------------+
           |            | OUTPUT SIGNAL  |~S9
           |            | OF ABNORMALITY |
           |            +----------------+
           |<-----------------+
           |
        ( END )
```

## FIG. 17

# FIG. 18

EP 2 777 859 B1

# FIG. 19

# FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2001118560 A
- JP 2009113070 A

- JP 2011036892 A